(19) Europäisches Patentamt / European Patent Office / Office européen des brevets

(11) **EP 2 551 320 B1**

(12) **EUROPEAN PATENT SPECIFICATION**


(45) Date of publication and mention of the grant of the patent:
**10.05.2017 Bulletin 2017/19**

(21) Application number: **11758992.9**

(22) Date of filing: **18.03.2011**

(51) Int Cl.:
***C09J 133/14*** (2006.01)
***C09J 7/02*** (2006.01)
***C09J 133/04*** (2006.01)
***C09J 133/24*** (2006.01)
***C09J 139/04*** (2006.01)

(86) International application number:
**PCT/JP2011/001619**

(87) International publication number:
**WO 2011/118181 (29.09.2011 Gazette 2011/39)**


(54) **ACRYLIC ADHESIVE COMPOSITION AND ACRYLIC ADHESIVE TAPE**

ACRYLKLEBEZUSAMMENSETZUNG UND ACRYLKLEBEBAND

COMPOSITION ADHÉSIVE ACRYLIQUE ET RUBAN ADHÉSIF ACRYLIQUE


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.03.2010 JP 2010070372**

(43) Date of publication of application:
**30.01.2013 Bulletin 2013/05**



(73) Proprietor: **Nitto Denko Corporation**
**Ibaraki-shi, Osaka 567-8680 (JP)**

(72) Inventors:
- **OKAMOTO, Masayuki**
  **Ibaraki-shi**
  **Osaka 567-8680 (JP)**
- **NIWA, Masahito**
  **Ibaraki-shi**
  **Osaka 567-8680 (JP)**
- **AKIYAMA, Jun**
  **Ibaraki-shi**
  **Osaka 567-8680 (JP)**
- **SHIGETOMI, Kiyoe**
  **Ibaraki-shi**
  **Osaka 567-8680 (JP)**

(74) Representative: **Grünecker Patent- und Rechtsanwälte**
**PartG mbB**
**Leopoldstraße 4**
**80802 München (DE)**



(56) References cited:
**EP-A1- 2 169 024**
**WO-A1-03/068280**
**WO-A1-2009/116504**
**JP-A- 2001 089 731**
**JP-A- 2003 129 022**
**JP-A- 2003 129 022**
**JP-A- 2006 213 603**
**JP-A- 2006 213 603**
**JP-A- 2008 222 814**
**JP-A- 2008 222 814**
**JP-A- 2009 120 807**
**US-A1- 2005 080 195**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



EP 2 551 320 B1

## Description

TECHNICAL FIELD

The present invention relates to an acrylic pressure-sensitive adhesive composition and an acrylic pressure-sensitive adhesive tape.

BACKGROUND ART

Because acrylic pressure-sensitive adhesive tapes each having an acrylic pressure-sensitive adhesive layer are excellent in light resistance, weatherability, oil resistance, etc., and further excellent in adhesiveness, such as pressure-sensitive adhesive force, resistance to resilience, and holding property (cohesive force), and aging resistance, such as heat resistance and weatherability, the acrylic pressure-sensitive adhesive tapes have been conventionally used in wide applications. In particular, the acrylic pressure-sensitive adhesive tapes having such properties have been widely used as joining materials in various industrial fields, such as home electronic appliances, building materials, and automobile interior and exterior materials. Accordingly, the acrylic pressure-sensitive adhesive tapes are required to be adhered, with high reliability, to various adherends (objects to be joined) including: metallic materials, such as stainless steel and aluminum; various plastic materials, such as polyethylene, polypropylene, polystyrene, ABS, (meth)acrylic resin, and polycarbonate resin; and glass materials.

A method of adding a tackifying resin (tackifier) to an acrylic pressure-sensitive adhesive composition that forms an acrylic pressure-sensitive adhesive layer is known as a method of enhancing the adhesiveness of an acrylic pressure-sensitive adhesive tape to an adherend. Patent Documents 1 and 2 disclose acrylic pressure-sensitive adhesive compositions in each of which rosin or a hydrogenated petroleum resin has been added, as a tackifying resin, to an acrylic polymer.

Patent Documents

[Patent Document 1] Japanese Patent Application Publication No. 1994-207151

[Patent Document 2] Japanese Patent Application Publication (Translation of PCT Application) No. 1999-504054

JP 2008 222814 A, JP 2006 213603 A, US 2005/080195 A1, JP 2003 129022 A, EP 2169024 A1, WO 2009/116504 A1 and JP 2009 120807 A also disclose acrylic pressure-sensitive adhesive compositions.

DISCLOSURE OF THE INVENTION

Problem to be Solved by the Invention

Acrylic pressure-sensitive adhesive tapes are always required to have improved adhesiveness to adherends. In particular, it is strongly required that acrylic pressure-sensitive adhesive tapes should have improved adhesiveness to adherends having low polarity represented by polyolefin resins, such as polyethylene and polypropylene, which are frequently used for home electric appliances, building materials, and automobile interior and exterior materials, etc. On the other hand, there are sometimes the cases where the aforementioned acrylic pressure-sensitive adhesive composition to which a tackifying resin, such as rosin, has been added does not sufficiently meet the demand that the adhesiveness of an acrylic pressure-sensitive adhesive tape to an adherend having low polarity should be improved.

The present invention has been made in view of these situations, and a purpose of the invention is to provide a technique in which the adhesiveness of an acrylic pressure-sensitive adhesive tape can be improved.

Means for Solving the Problem

An embodiment according to the present invention is an acrylic pressure-sensitive adhesive composition in accordance with claim 1. The acrylic pressure-sensitive adhesive composition comprises: an acrylic polymer (A) that contains, as a monomer unit, a vinyl monomer having a nitrogen atom in its backbone and that does not substantially contain a carboxyl group-containing monomer; and a (meth)acrylic polymer (B) having a weight average molecular weight of 1000 or more and less than 30000.

According to the acrylic pressure-sensitive adhesive composition of this embodiment, the adhesiveness of an acrylic pressure-sensitive adhesive tape can be improved.

In the acrylic pressure-sensitive adhesive composition according to the aforementioned embodiment, the acrylic polymer (A) is a copolymer in which the vinyl monomer and a (meth)acrylic acid ester represented by the following general formula (1) are copolymerized together as an essential component:

$$CH_2=C(R^1)COOR^2 \qquad (1)$$

[wherein, $R^1$ is a hydrogen atom or methyl group and $R^2$ is a $C_{1-12}$ alkyl group or alicyclic hydrocarbon group].

In the acrylic pressure-sensitive adhesive composition according to the aforementioned embodiment, the vinyl monomer may be one or more types of monomers selected from the group consisting of the N-vinyl cyclic amides represented by the following general formula (2) and (meth)acrylic amides:

[Formula 1]

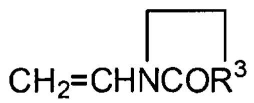

(2)

[wherein, $R^3$ is a divalent organic group].

In the acrylic pressure-sensitive adhesive composition according to the aforementioned embodiment, the content of the (meth)acrylic polymer (B) is within a range of 2 to 70 parts by weight, based on 100 parts by weight of the acrylic polymer (A).

Another embodiment according to the present invention is an acrylic pressure-sensitive adhesive tape. The acrylic pressure-sensitive adhesive tape has a pressure-sensitive adhesive layer containing the acrylic pressure-sensitive adhesive composition according to any one of the aforementioned embodiments.

Advantage of the Invention

According to the present invention, the adhesiveness of an acrylic pressure-sensitive adhesive tape can be improved.

BEST MODE FOR CARRYING OUT THE INVENTION

An acrylic pressure-sensitive adhesive composition according to the present embodiment comprises: an acrylic polymer (A) as an pressure-sensitive adhesive composition; and a (meth)acrylic polymer (B), as a tackifying resin, that has a weight average molecular weight of 1000 or more and less than 30000 (hereinafter, appropriately referred to as a (meth)acrylic polymer (B)). Hereinafter, the acrylic polymer (A) and the (meth)acrylic polymer (B) will be described in detail.

[Acrylic Polymer (A)]

The acrylic polymer (A) is a polymer that contains, as a monomer unit, a vinyl monomer having a nitrogen atom in its backbone and that does not substantially contain a carboxyl group-containing monomer. The acrylic pressure-sensitive adhesive composition according to the present embodiment has moderate polarity by containing, in the acrylic polymer (A) and as a monomer unit, a vinyl monomer having a nitrogen atom in its backbone. In addition, it is prevented that the polarity of the acrylic polymer (A) may become too large by not substantially containing a carboxyl group-containing monomer in the acrylic polymer (A). Thereby, the adhesiveness of the acrylic pressure-sensitive adhesive composition (acrylic pressure-sensitive adhesive tape) to an adherend having low polarity is improved. Further, by not substantially containing a carboxyl group-containing monomer in the acrylic polymer (A), the affinity with the (meth)acrylic polymer (B) having polarity between low polarity and middle polarity can be enhanced. Thereby, the pressure-sensitive adhesive force, resistance to resilience, and holding property of the acrylic pressure-sensitive adhesive composition (acrylic pressure-sensitive adhesive tape) can be simultaneously improved. Furthermore, when the acrylic pressure-sensitive adhesive composition (acrylic pressure-sensitive adhesive tape) is used in an optical application, the transparency of the acrylic-pressure sensitive adhesive composition (acrylic pressure-sensitive adhesive tape) can be enhanced. Still furthermore, by not substantially containing a carboxyl group-containing monomer in the acrylic polymer

(A), it can be prevented that an adhered may corrode.

Herein, the aforementioned "a carboxyl group-containing monomer" refers to a vinyl monomer (ethylenically unsaturated monomer) having at least one carboxyl group (that can be in an anhydride form) in its single molecule. The carboxyl group-containing monomer includes: ethylenically unsaturated monocarbonic acids, such as (meth)acrylic acid and crotonic acid; ethylenically unsaturated dicarbonic acids, such as maleic acid, itaconic acid, and citraconic acid; and ethylenically unsaturated dicarbonic acid anhydrides, such as maleic acid anhydride and itaconic acid anhydride. In addition, the aforementioned "not substantially containing" means that the acrylic polymer (A) does not contain a carboxyl group-containing monomer at all or that the content thereof is 0.1% by weight or less, based on the total weight of the whole monomer components. Alternatively, the aforementioned "not substantially containing" means, for example, that the content of the carboxyl group contained in the acrylic polymer (A) is 0.0014 mol/gram equivalent or less.

It is preferable that the acrylic polymer (A) does not substantially contain a carboxyl group-containing monomer and also does not substantially contain a monomer containing an acid group other than a carboxyl group (sulfonic acid group, phosphoric acid group.) That is, it is preferable that a carboxyl group-containing monomer and a monomer containing another acid group are not contained at all or that the total amount of the two is 0.1% by weight or less, based on the total weight of the whole monomer components. Alternatively, it is preferable that the total amount of the carboxyl group and another acid group, contained in the acrylic polymer (A), is 0.0014 mol/gram equivalent or less.

The acrylic polymer (A) is a copolymer in which a vinyl monomer having a nitrogen atom in its backbone and the (meth)acrylic acid ester represented by the following general formula (1) are copolymerized together as an essential component:

$$CH_2=C(R^1)COOR^2 \qquad (1)$$

[wherein, $R^1$ is a hydrogen atom or methyl group and $R^2$ is a $C_{1-12}$ alkyl group or alicyclic hydrocarbon group].

The acrylic polymer (A) can be obtained by polymerizing (for example, solution polymerization, emulsion polymerization, UV polymerization) a vinyl monomer and a (meth)alkyl acid ester along with a polymerization initiator. Herein, the aforementioned "copolymerized together as an essential component" means that the total amount of the vinyl monomer and the (meth)acrylic acid ester is approximately 50% by weight or more, based on the total weight of the monomer components that form the acrylic polymer (A). The total amount of the vinyl monomer and the (meth)acrylic acid ester is within a range of approximately 50% by weight or more to approximately 99.9% by weight or less, preferably within a range of approximately 60% by weight or more to approximately 95% by weight or less, and more preferably within a range of approximately 70% by weight or more to approximately 85% by weight or less, based on the total weight of the monomer components.

It is preferable that the vinyl monomer having a nitrogen atom in its backbone is one or more types of monomers selected from the group consisting of the N-vinyl cyclic amides represented by the following general formula (2) and (meth)acrylic amides:

[Formula 2]

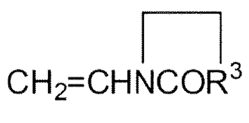 (2)

[wherein, $R^3$ is a divalent organic group].

Specific examples of the N-vinyl cyclic amides include N-vinyl-2-pyrrolidone, N-vinyl-2-piperidone, N-vinyl-3-morpholine, N-vinyl-2-caprolactam, N-vinyl-1,3-oxazine-2-one, and N-vinyl-3,5-morpholine dione, etc.

Specific examples of the (meth)acrylic amides include: (meth)acrylamide; N-alkyl(meth)acrylamides, such as N-ethyl(meth)acrylamide, N-n-butyl(meth)acrylamide, N-isopropyl(meth)acrylamide, N-methylol(meth)acrylamide, N-methylolpropane(meth)acrylamide, N-methoxymethyl(meth)acrylamide, and N-butoxymethyl(meth)acrylamide; N,N-dialkyl(meth)acrylamides, such as N,N-dimethyl(meth)acrylamide, N,N-diethyl(meth)acrylamide, N,N-dipropyl(meth)acrylamide, N,N-diisopropyl(meth)acrylamide, N,N-di(n-butyl)(meth)acrylamide, and N,N-di(t-butyl)(meth)acrylamide; N-methylol(meth)acrylamide; and N-ethylol(meth) acrylamide. These vinyl monomers can be used alone or in combination of two or more thereof.

Examples of a vinyl monomer having a nitrogen atom in its backbone other than the aforementioned vinyl monomers include: succinimide monomers, such as N-(meth)acryloyloxy methylenesuccinimide, N-(meth)acryloyl-6-oxyhexamethylene succinimide, and N-(meth)acryloyl-8-oxyhexamethylene succinimide; maleimide monomers, such as N-cyclohexyl maleimide, N-isopropylmaleimide, N-lauryl maleimide, and N-phenylmaleimide; itaconimide monomers, such as N-methyl itaconimide, N-ethyl itaconimide, N-butyl itaconimide, N-octyl itaconimide, N-2-ethylhexyl itaconimide, N-cyclohexyl itaconimide, and N-lauryl itaconimide; nitrogen-containing heterocyclic monomers, such as N-methylvinyl

pyrrolidone, N-vinylpyrazine, N-vinylimidazole, N-vinyloxazole, N-(meth)acryloyl piperidine, N-(meth)acryloyl pyrrolidine, N-vinylmorpholine, N-vinylpyrazole, N-vinylisoxazol, N-vinylthiazole, N-vinylisothiazole, N-vinyl pyridazine, N-(meth)acryloyl-2-pyrrolidone, N-vinylpyridine, N-vinylpyrimidine, N-vinylpiperazine, and N-vinylpyrrole; lactam monomers, such as N-vinylcaprolactam; (meth) acrylic acid amino alkyl monomers, such as (meth)acrylic acid aminoethyl, (meth)acrylic acid N,N-dimethylaminoethyl, (meth)acrylic acid N,N-dimethylaminoethyl, and (meth)acrylic acid t-butylaminoethyl; isocyanate group-containing monomers, such as 2-isocyanate ethyl(meth)acrylate; acryloyl morpholine; and N-vinyl carboxylic acid amides. These vinyl monomers can be used alone or in combination of two or more thereof.

The N-vinyl cyclic amides represented by the aforementioned general formula (2) and (meth)acrylamides can be preferably used as the vinyl monomer. $R^3$ in the aforementioned general formula (2) is preferably a saturated or unsaturated hydrocarbon group, and more preferably a saturated hydrocarbon group (e.g., a $C_{3-5}$ alkylene group). Examples of the particularly preferable N-vinyl cyclic amides include N-vinyl-2-pyrrolidone and N-vinyl-2-caprolactam. Examples of the particularly preferable (meth)acrylamides include N,N-dimethyl(meth)acrylamide and N,N-diethyl(meth)acrylamide.

Specific examples of the (meth)acrylic acid esters represented by the aforementioned general formula (1) include:

(meth)acrylic acid alkyl esters, such as (meth)acrylic acid methyl, (meth)acrylic acid ethyl, (meth)acrylic acid propyl, (meth)acrylic acid isopropyl, (meth)acrylic acid butyl, (meth)acrylic acid isobutyl, (meth)acrylic acid s-butyl, (meth)acrylic acid t-butyl, (meth)acrylic acid pentyl, (meth)acrylic acid isopentyl, (meth)acrylic acid hexyl, (meth)acrylic acid heptyl, (meth)acrylic acid octyl, (meth)acrylic acid-2-ethylhexyl (2-ethylhexyl (meth)acrylate), (meth)acrylic acid isooctyl, (meth)acrylic acid nonyl, (meth)acrylic acid isononyl, (meth)acrylic acid decyl, (meth)acrylic acid isodecyl, (meth)acrylic acid undecyl, and (meth)acrylic acid dodecyl; (meth)acrylic acid esters having an alicyclic hydrocarbon group, such as cyclopentyl (meth) acrylate, cyclohexyl(meth)acrylate, and isobornyl(meth)acrylate; (meth)acrylic acid esters having an aromatic hydrocarbon group, such as phenyl (meth)acrylate; and (meth)acrylic acid esters obtained from alcohols derived from terpene compounds.

These (meth)acrylic acid esters can be used alone or in combination. Herein, the (meth)acrylic acid esters mean acrylic acid esters and/or methacrylic acid esters, and all of the "(meth)..." expressions have the same meaning.

For the purpose of modifying cohesive force, heat resistance, and cross-linking property, the acrylic polymer (A) contains another monomer component (copolymerizable monomer) that is copolymerizable with the vinyl monomer and the (meth)acrylic acid ester. That is, the acrylic polymer (A) contains a copolymerizable monomer along with the vinyl monomer and (meth)acrylic acid ester as major components.

The copolymerizable monomer includes: vinyl esters, such as vinyl acetate and vinyl propionate; cyanoacrylate monomers, such as acrylonitrile and methacrylonitrile; (meth)acrylic acid alkoxy alkyl monomers, such as (meth)acrylic acid methoxyethyl and (meth)acrylic acid ethoxyethyl; hydroxyl group-containing monomers, such as (meth)acrylic acid hydroxyalkyls including (meth)acrylic acid hydroxyethyl, (meth)acrylic acid hydroxypropyl, (meth)acrylic acid hydroxybutyl, (meth)acrylic acid hydroxyhexyl, (meth)acrylic acid hydroxy octyl, (meth)acrylic acid hydroxydecyl, (meth)acrylic acid hydroxylauryl, and (4-hydroxymethyl cyclohexyl)methyl methacrylate, etc.; styrene monomers, such as styrene and $\alpha$-methylstyrene; epoxy group-containing acrylic monomers, such as (meth)acrylic acid glycidyl; glycol acrylic ester monomers, such as (meth)acrylic acid polyethylene glycol, (meth)acrylic acid polypropylene glycol, (meth)acrylic acid methoxyethylene glycol, and (meth)acrylic acid methoxypolypropylene glycol; acrylic acid ester monomers having a heterocycle, halogen atom, silicon atom, or the like, such as (meth)acrylic acid tetrahydrofurfuryl, fluorine atom-containing (meth)acrylate, and silicone(meth)acrylate; olefin monomers, such as isoprene, butadiene, and isobutylene; vinyl ether monomers, such as methyl vinyl ether and ethyl vinyl ether; aromatic vinyl compounds, such as vinyl toluene and styrene; olefins or dienes, such as ethylene, butadiene, isoprene, and isobutylene; vinyl ethers, such as vinyl alkyl ether; and vinyl chloride. These copolymerizable monomers can be used alone or in combination of two or more thereof.

The copolymerizable monomer is contained in an amount within a range of approximately 0.1 to approximately 40% by weight, preferably within a range of approximately 0.5 to approximately 30% by weight, and more preferably within a range of approximately 1 to approximately 20% by weight, based on the total weight of the monomer components for preparing the acrylic polymer (A).

By containing the copolymerizable monomer in an amount of approximately 0.1% by weight or more, a decrease in the cohesive force of the acrylic pressure-sensitive adhesive tape or sheet having a pressure-sensitive adhesive layer formed of the acrylic pressure-sensitive adhesive composition can be prevented, and high shear force can be obtained. Further, by containing the copolymerizable monomer in an amount of approximately 40% by weight or less, it can be prevented that the cohesive force may become too large, and the tackiness at normal temperature (25°C) can be improved.

A polyfunctional monomer may be contained, if necessary, in the acrylic polymer (A) in order to adjust the cohesive force of the acrylic pressure-sensitive adhesive composition to be formed.

Examples of the polyfunctional monomer include, for example: (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, 1,2-ethylene glycol di(meth)acrylate, 1,6-hexanediol di(meth)acrylate, 1,12-dodecane diol di(meth)acrylate, trimethylolpropane tri(meth)acrylate, tetramethylol methane tri(meth)acrylate, allyl(meth)acrylate, vinyl(meth)acrylate, divinylbenzene, epoxy acrylate, polyester acrylate, urethane acrylate, butyl di(meth)acrylate, and hexyl di(meth) acrylate. Among them, trimethylolpropane tri(meth)acrylate, hexanediol di(meth)acrylate, and dipentaerythritol hexa(meth)acrylate can be preferably used. The polyfunctional (meth)acrylates can be used alone or in combination of two or more thereof.

The use amount of the polyfunctional monomer is changed depending on the molecular weight or the number of functional groups thereof, but the polyfunctional monomer is added in an amount within a range of approximately 0.01 to approximately 3.0% by weight, preferably within a range of approximately 0.02 to approximately 2.0% by weight, and more preferably within a range of approximately 0.03 to approximately 1.0% by weight, based on the total weight of the monomer components for preparing the acrylic polymer (A).

If the use amount of the polyfunctional monomer is more than approximately 3.0% by weight based on the total weight of the monomer components for preparing the acrylic polymer (A), for example, the cohesive force of the acrylic pressure-sensitive adhesive composition may become too high and accordingly there are sometimes the cases where the adhesive force is decreased. On the other hand, if the use amount thereof is less than approximately 0.01% by weight, for example, there are sometimes the cases where the cohesive force of the acrylic pressure-sensitive adhesive composition is decreased.

<Polymerization Initiator>

In preparing the acrylic polymer (A), the acrylic polymer (A) can be easily formed by a curing reaction using heat or ultraviolet rays with the use of a polymerization initiator, such as thermal polymerization initiator, photo-polymerization initiator (photo-initiator), or the like. In particular, a photo-polymerization initiator can be preferably used in terms of the advantage that a polymerization time can be shortened. The polymerization initiators can be used alone or in combination of two or more thereof.

Examples of the thermal polymerization initiator include, for example: azo polymerization initiators (for example, 2,2'-azobisisobutyronitrile, ,2'-azobis-2-methylbutyronitrile, 2,2'-azobis(2-methylpropionic acid)dimethyl, 4,4'-azobis-4-cyanovalerianic acid, azobis isovaleronitrile, 2,2'-azobis(2-amidinopropane)dihydrochloride, 2,2'-azobis[2-(5-methyl-2-imidazoline-2-yl) propane]dihydrochloride, 2,2'-azobis(2-methylpropionamidine)disulfate, and 2,2'-azobis (N,N'-dimethyleneisobutylamidine) dihydrochloride); peroxide polymerization initiators (for example, dibenzoyl peroxide, t-butyl permaleate, and lauroyl peroxide ); and redox polymerization nitiators.

The use amount of the thermal polymerization initiator is not particularly limited, and only has to be within a conventional range in which it can be used as a thermal polymerization initiator.

The photo-polymerization initiator is not particularly limited, but, for example, a benzoin ether photo-polymerization initiator, acetophenone photo-polymerization initiator, α-ketol photo-polymerization initiator, aromatic sulfonyl chloride photo-polymerization initiator,

photoactive oxime photo-polymerization initiator, benzoin photo-polymerization initiator, benzyl photo-polymerization initiator, benzophenone photo-polymerization initiator, ketal photo-polymerization initiator, thioxanthone photo-polymerization initiator or acylphosphine oxide photo-polymerization initiator can be used.

Specific examples of the benzoin ether photo-polymerization initiator include, for example: benzoin methyl ether, benzoin ethyl ether, benzoin propyl ether, benzoin isopropyl ether, benzoin isobutyl ether, 2,2-dimethoxy-1,2-diphenylethane-1-one [product name: IRGACURE 651, made by Ciba Speciality Chemicals Inc.], and anisole methyl ether, etc. Specific examples of the acetophenone photo-polymerization initiator include, for example: 1-hydroxycyclohexyl phenyl ketone [product name: IRGACURE 184, made by Ciba Speciality Chemicals Inc.], 4-phenoxy dichloroacetophenone, 4-t-butyl-dichloroacetophenone, 1-[4-(2-hydroxyethoxy)-phenyl]-2-hydroxy-2-methyl-1-propane-1 -one [product name: IRGACURE 2959, made by Ciba Speciality Chemicals Inc.], 2-hydroxy-2-methyl-1-phenyl-propane-1-one [product name: DAROCUR 1173, made by Ciba Speciality Chemicals Inc.], and methoxy acetophenone. Specific examples of the α-ketol photo-polymerization initiator include, for example: 2-methyl-2-hydroxy propiophenone and 1-[4-(2-hydroxyethyl)-phenyl]-2-hydroxy-2-methylpropane-1-one, Specific examples of the aromatic sulfonyl chloride photo-polymerization initiator include, for example, 2-naphthalene sulfonyl chloride. Specific examples of the photoactive oxime photo-polymerization initiator include, for example, 1-phenyl-1,1-propanedione-2-(o-ethoxycarbonyl)-oxime.

Specific examples of the benzoin photo-polymerization initiator include, for example, benzoin. Specific examples of the benzyl photo-polymerization initiator include, for example, benzyl. Specific examples of the benzophenone photo-polymerization initiators include, for example, benzophenone, benzoylbenzoic acid, 3,3'-dimethyl-4-methoxybenzophenone, polyvinyl benzophenone, and α-hydroxy cyclohexyl phenyl ketone. Specific examples of the ketal photo-polymerization initiator include, for example, benzyl dimethyl ketal. Specific examples of the thioxanthone photo-polymerization

initiator include, for example, thioxanthone, 2-chlorothioxanthone, 2-methyl thioxanthone, 2,4-dimethyl thioxanthone, isopropyl thioxanthone, 2,4-dichloro thioxanthone, 2,4-diethyl thioxanthone, isopropyl thioxanthone, 2,4-diisopropyl thioxanthone, and dodecyl thioxanthone.

Examples of the acylphosphine photo-polymerization initiator include, for example: bis(2,6-dimethoxybenzoyl)phenylphosphine oxide, bis(2,6-dimethoxybenzoyl)(2,4,4-trimethylpentyl) phosphine oxide, bis(2,6-dimethoxybenzoyl)-n-butyl phosphine oxide, bis(2,6-dimethoxybenzoyl)-(2-methylpropane-1-yl)phosphine oxide, bis(2,6-dimethoxybenzoyl)-(1-methylpropane-1-yl) phosphine oxide, bis(2,6-dimethoxybenzoyl)-t-butylphosphine oxide, bis(2,6-dimethoxybenzoyl)cyclohexylphosphine oxide, bis(2,6-dimethoxybenzoyl)octylphosphine oxide, bis(2-methoxybenzoyl)(2-methylpropane-1-yl)phosphine oxide, bis(2-methoxybenzoyl)(1-methylpropane-1-yl)phosphine oxide, bis(2,6-diethoxybenzoyl)(2-methylpropane-1-yl)phosphine oxide, bis(2,6-diethoxybenzoyl)(1-methylpropane-1-yl) phosphine oxide, bis(2,6-dibutoxybenzoyl)(2-methylpropane-1-yl) phosphine oxide, bis(2,4-dimethoxybenzoyl)(2-methypropane-1-yl) phosphine oxide, bis(2,4,6-trimethylbenzoyl)(2,4-dipentoxyphenyl) phosphine oxide, bis(2,6-dimethoxybenzoyl)benzyl phosphine oxide, bis(2,6-dimethoxybenzoyl)-2-phenylpropyl phosphine oxide, bis(2,6-dimethoxybenzoyl)-2-phenylethyl phosphine oxide, bis(2,6-dimethoxybenzoyl)benzyl phosphine oxide, bis(2,6-dimethoxybenzoyl)-2-phenylpropyl phosphine oxide, bis(2,6-dimethoxybenzoyl)-2-phenylethyl phosphine oxide, 2,6-dimethoxybenzoyl benzylbutylphosphine oxide, 2,6-dimethoxybenzoyl benzyloctylphosphine oxide, bis(2,4,6-trimethylbenzoyl)-2,5-diisopropylphenylphosphine oxide, bis(2,4,6-trimethylbenzoyl)-2-methylphenylphosphine oxide, bis(2,4,6-trimethylbenzoyl)-4-methylphenylphosphine oxide, bis(2,4,6-trimethylbenzoyl)-2,5-diethylphenylphosphine oxide, bis(2,4,6-trimethylbenzoyl)-2,3,5,6-tetramethylphenylphosphin e oxide, bis(2,4,6-trimethyl benzoyl)-2,4-di-n-butoxy phenylphosphine oxide, 2,4,6-trimethylbenzoyl diphenylphosphine oxide, bis(2,6-dimethoxybenzoyl)-2,4,4-trimethylpentylphosphine oxide, bis(2,4,6-trimethylbenzoyl)isobutylphosphine oxide, 2,6-dimethoxybenzoyl-2,4,6-trimethylbenzoyl-n-butylphosphine oxide, bis(2,4,6-trimethylbenzoyl)phenylphosphine oxide, bis(2,4,6-trimethylbenzoyl)-2,4-dibutoxyphenylphosphine oxide, 1,10-bis[bis(2,4,6-trimethylbenzoyl)phosphine oxide]decane, and tri(2-methylbenzoyl)phosphine oxide.

The use amount of the photo-polymerization initiator is not particularly limited, but the photo-polymerization initiator is combined in an amount within a range of, for example, approximately 0.01 to approximately 5 parts by weight, and preferably within a range of approximately 0.05 to approximately 3 parts by weight, based on 100 parts by weight of the monomer components for preparing the acrylic polymer (A).

If the use amount of the photo-polymerization initiator is less than approximately 0.01 parts by weight, there are sometimes the cases where a polymerization reaction becomes insufficient. If the use amount thereof is more than approximately 5 parts by weight, there are sometimes the cases where an ultraviolet ray does not reach the inside of the pressure-sensitive adhesive layer, because the photo-polymerization initiator absorbs an ultraviolet ray. In this case, a decrease in the rate of polymerization is caused, or the molecular weight of the generated polymer becomes small. Thereby, the cohesive force of the formed pressure-sensitive adhesive layer becomes small, and hence there are sometimes the cases where, when the pressure-sensitive adhesive layer is peeled off from a film, part of the pressure-sensitive adhesive layer remains on the film and accordingly the film cannot be reused. The photo-polymerization initiators may be used alone or in combination of two or more thereof.

Besides the aforementioned polyfunctional monomers, a cross-linking agent can also be used for adjusting the cohesive force. Commonly-used cross-linking agents can be used as the cross-linking agent. Examples of the cross-linking agents include, for example: epoxy cross-linking agent, isocyanate cross-linking agent, silicone cross-linking agent, oxazoline cross-linking agent, aziridine cross-linking agent, silane cross-linking gent, alkyl-etherified melamine cross-linking agent, and metal chelate cross-linking agent. In particular, the isocyanate cross-linking agent and epoxy cross-linking agent can be preferably used.

Specific examples of the isocyanate cross-linking agent include: tolylene diisocyanate, hexamethylene diisocyanate, isophorone diisocyanate, xylylene diisocyanate, hydrogenated xylylene diisocyanate, diphenylmethane diisocyanate, hydrogenated diphenylmethane diisocyanate, tetramethyl xylylene diisocyanate, naphthalene diisocyanate, triphenylmethane triisocyanate, polymethylene polyphenyl isocyanate, and these adducts with polyols, such as trimethylolpropane.

Examples of the epoxy cross-linking agent include: bisphenol A, epichlorohydrin type epoxy resin, ethyleneglycidylether, polyethylene glycol diglycidyl ether, glycerin diglycidyl ether, glycerin triglycidyl ether, 1,6-hexanediol glycidyl ether, trimethylolpropane triglycidyl ether, diglycidyl aniline, diamine glycidyl amine, N,N,N',N'-tetraglycidyl-m-xylylenediamine, and 1,3-bis(N,N'-diamine glycidyl aminomethyl) cyclohexane.

In addition, the pressure-sensitive adhesive composition according to the present embodiment may appropriately contain a conventionally and publicly-known silane coupling agent from the viewpoint of the adhesiveness to an optical member, such as glass.

Examples of the aforementioned silane coupling agent include, for example: vinyl group-containing silane coupling agents, such as vinyltrichlorosilane, vinyltris($\beta$-methoxyethoxy)silane, vinyltriethoxysilane, and vinyltrimethoxysilane; styryl group-containing silane coupling agents, such as p-styryltrimethoxysilane; (meth)acryloyl group-containing silane coupling agents, such as $\gamma$-methacryloxypropyltrimethoxysilane, $\gamma$-methacryloxypropyltriethoxysilane, and $\gamma$-acry-

loxypropyltrimethoxysilane; epoxy group-containing silane coupling agents, such as β-(3,4-epoxycyclohexyl)ethyltrimethoxysilane, γ-glycidoxypropyltrimethoxysilane, and γ-glycidoxypropyltriethoxysilane; amino group-containing silane coupling agents, such as N-β(aminoethyl)γ-aminopropyltrimethoxysilane, N-β(aminoethyl)γ-aminopropyldimethoxysilane, γ-aminopropyltriethoxysilane, and N-phenyl-γ-aminopropyltrimethoxysilane; and silane coupling agents, such as γ-chloropropyltrimethoxysilane, γ-mercaptopropylmethyldimethoxysilane, bis(triethoxysilylpropyl)tetrasulfide, and γ-isocyanatepropyltrimethoxysilane. A silane coupling agents having an epoxy group can be used preferably, and γ-glycidoxypropyltrimethoxysilane can be used more preferably.

The use amount of the silane coupling agent is usually set to be within a range of 0.001 to 5 parts by weight, and preferably set to be within a range of 0.01 to 2 parts by weight, based on 100 parts by weight of the acrylic polymer. If the use amount of the silane coupling agent is too small, the adhesiveness to an optical member, such as glass, cannot be sufficiently improved, while the use amount thereof is too large, there is the fear that it may become difficult to maintain the adhesive property at a good condition.

In the present embodiment, the acrylic polymer (A) can also be prepared as a partial polymer (acrylic polymer syrup) that can be obtained by radiating ultraviolet (UV) rays onto a mixture in which the aforementioned monomer components and the polymerization initiator have been combined, so that the monomer components are partially polymerized. An acrylic pressure-sensitive adhesive composition is prepared by combining the later-described (meth)acrylic polymer (B) into the acrylic polymer syrup, and then polymerization can also be completed by coating the pressure-sensitive adhesive composition on a predetermined object to be coated and by radiating UV rays. The weight average molecular weight (Mw) of the acrylic polymer (A) is within a range of, for example, 30000 to 5000000.

[(Meth)Acrylic Polymer (B)]

The (meth) acrylic polymer (B) is a polymer having a weight average molecular weight smaller than that of the acrylic polymer (A), and functions as a tackifying resin and has the advantage that inhibition of polymerization is hardly caused when UV polymerization is performed. The (meth)acrylic polymer (B) includes, for example, a (meth)acrylic acid ester as a monomer unit.

Examples of such a (meth) acrylic acid ester include: (meth)acrylic acid alkyl esters, such as, (meth)acrylic acid methyl, (meth)acrylic acid ethyl, (meth)acrylic acid propyl, (meth)acrylic acid isopropyl, (meth)acrylic acid butyl, (meth)acrylic acid isobutyl, (meth)acrylic acid s-butyl, (meth)acrylic acid t-butyl, (meth)acrylic acid pentyl, (meth)acrylic acid isopentyl, (meth)acrylic acid hexyl, (meth)acrylic acid-2-ethylhexyl, (meth)acrylic acid heptyl, (meth)acrylic acid octyl, (meth)acrylic acid isooctyl, (meth)acrylic acid nonyl, (meth)acrylic acid isononyl, (meth)acrylic acid decyl, (meth)acrylic acid isodecyl, (meth)acrylic acid undecyl, and (meth)acrylic acid dodecyl; esters of (meth)acrylic acids with alicyclic alcohols, such as (meth)acrylic acid cyclohexyl and (meth)acrylic acid isobornyl; (meth) acrylic acid aryl esters, such as (meth) acrylic acid phenyl and (meth)acrylic acid benzyl; and (meth)acrylic acid esters obtained from alcohols derived from terpene compounds. These (meth) acrylic acid esters can be used alone or in combination of two or more thereof.

The (meth)acrylic polymer (B) can also be obtained by copolymerizing, other than the aforementioned (meth)acrylic acid ester component units, another monomer component (copolymerizable monomer) that is copolymerizable with the (meth)acrylic acid ester.

Examples of the another monomer that is copolymerizable with the (meth)acrylic acid ester include:

(meth)acrylic acid alkoxyalkyl monomers, such as (meth)acrylic acid methoxyethyl, (meth)acrylic acid ethoxyethyl, (meth)acrylic acid propoxyethyl, (meth)acrylic acid butoxyethyl, and (meth)acrylic acid ethoxypropyl; salts, such as (meth)acrylic acid alkali metal salt; di(meth)acrylic acid ester monomers of (poly)alkylene glycols, such as di(meth)acrylic acid ester of ethylene glycol, di (meth) acrylic acid ester of diethylene glycol, di(meth)acrylic acid ester of triethylene glycol, di(meth)acrylic acid ester of polyethylene glycol, di (meth) acrylic acid ester of propylene glycol, di (meth) acrylic acid ester of dipropylene glycol, and di (meth) acrylic acid ester of tripropylene glycol; poly(meth)acrylic acid ester monomers, such as trimethylolpropane tri(meth)acrylic acid ester; vinyl esters, such as vinyl acetate and vinyl propionate; halogenated vinyl compounds, such as vinylidene chloride and (meth)acrylic acid-2-chloroethyl; oxazoline group-containing polymerizable compounds, such as 2-vinyl-2-oxazoline, 2-vinyl-5-methyl-2-oxazoline, and 2-isopropenyl-2-oxazoline; aziridine group-containing polymerizable compounds, such as (meth)acryloylaziridine and (meth)acrylic acid-2-aziridinylethyl; epoxy group-containing vinyl monomers, such as allyl glycidyl ether, (meth) acrylic acid glycidyl ether, and (meth)acrylic acid-2-ethyl glycidyl ether; hydroxyl group-containing vinyl monomers, such as (meth)acrylic acid-2-hydroxyethyl, (meth)acrylic acid-2-hydroxypropyl, monoesters of (meth)acrylic acids with polypropylene glycol or polyethylene glycol, and adducts of lactones with (meth)acrylic acid-2-hydroxyethyl; fluorine-containing vinyl monomers, such as fluorine-substituted (meth)acrylic acid alkyl ester; acid anhydride group-containing monomers, such as maleic acid anhydride and itaconic acid anhydride; aromatic vinyl compound monomers, such as styrene, α-methylstyrene, and vinyl toluene; reactive halogen-containing vinyl monomers, such as 2-chloroethyl vinyl ether and monochloro vinyl acetate; amide group-containing vinyl monomers, such as (meth)acrylamide, N-isopropyl(meth)acrylamide, N-butyl(meth)acrylamide, N,N-diethyl(meth)acrylamide, N,N-dimethyl(meth)acrylamide, N-methylol(meth)acrylamide, N-ethylol(meth)acrylamide, N-methylolpropane(meth)acrylamide, N-methoxyethyl(meth)acrylamide, N-butoxymethyl(meth)acrylamide, and N-acryloyl morpholine; succinimide monomers, such as N-(meth)acryloyloxy methylene succinimide, N-(meth)acryloyl-6-oxy hexamethylene succinimide, and N-(meth)acryloyl-8-oxy hexamethylene succinimide; maleimide monomers, such as N-cyclohexyl maleimide, N-isopropylmaleimide, N-lauryl maleimide, and N-phenyl maleimide; itaconimide monomers, such as N-methylitaconimide, N-ethylitaconimide, N-butylitaconimide, N-octylitaconimide, N-2-ethylhexylitaconimide, N-cyclohexylitaconimide, and N-laurylitaconimide; nitrogen-containing heterocyclic monomers, such as N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-(meth)acryloyl-2-pyrrolidone, N-(meth)acryloylpiperidine, N-(meth)acryloylpyrrolidine, N-vinyl morpholine, N-vinyl pyrazole, N-vinyl isoxazole, N-vinyl thiazole, N-vinyl isothiazole, and N-vinyl pyridazine; N-vinyl carboxylic acid amides; lactam monomers, such as N-vinyl caprolactam; cyanoacrylate monomers, such as (meth)acrylonitrile; (meth)acrylic acid aminoalkyl monomers, such as (meth)acrylic acid aminoethyl, (meth)acrylic acid N,N-dimethylaminoethyl, (meth)acrylic acid N,N-dimethylaminoethyl, and (meth)acrylic acid t-butylaminoethyl; imide group-containing monomers, such as cyclohexyl maleimide and isopropyl maleimide; isocyanate group-containing monomers, such as 2-isocyanate ethyl (meth) acrylate; organic silicon-containing vinyl monomers, such as vinyltrimethoxysilane, γ-methacryloxpropyl trimethoxy silane, allyltrimethoxysilane, trimethoxysilylpropylallylamine, and 2-methoxy ethoxy trimethoxy silane; hydroxyl group-containing monomers, such as (meth)acrylic acid hydroxyalkyls including (meth)acrylic acid hydroxyethyl, (meth)acrylic acid hydroxypropyl, (meth)acrylic acid hydroxybutyl, (meth)acrylic acid hydroxyhexyl, (meth)acrylic acid hydroxyoctyl, (meth)acrylic acid hydroxydecyl, (meth)acrylic acid hydroxylauryl, and (4-hydroxymethyl cyclohexyl)methyl methacrylate; acrylic acid ester monomers having a heterocycle, halogen atom, silicon atom, or the like, such as (meth)acrylic acid tetrahydrofurfuryl, fluorine atom-containing (meth)acrylate, and silicone(meth)acrylate; olefin monomers, such as isoprene, butadiene, and isobutylene; vinyl ether monomers, such as methyl vinyl ether and ethyl vinyl ether; olefins or dienes, such as ethylene, butadiene, isoprene, and isobutylene; vinyl ethers, such as vinyl alkyl ether; vinyl chloride; and others, such as macro-monomers having a radically polymerizable vinyl group at the monomer end to which a vinyl group has been polymerized.These monomers can be polymerized, alone or in combination thereof, with the aforementioned (meth)acrylic acid esters.

In the acrylic pressure-sensitive adhesive composition according to the present embodiment, examples of the (meth)acrylic polymer (B) include, for example: a copolymer of cyclohexyl methacrylate (CHMA) and isobutyl methacrylate (IBMA), that of cyclohexyl methacrylate (CHMA) and isobornyl methacrylate (IBXMA), that of cyclohexyl methacrylate (CHMA) and acryloyl morpholine (ACMO), that of cyclohexyl methacrylate (CHMA) and diethylacrylamide (DEAA), that of 1-adamantyl acrylate (ADA) and methyl methacrylate (MMA), that of dicyclopentanyl methacrylate (DCPMA) and isobornyl methacrylate (IBXMA), and homopolymers of respective dicyclopentanyl methacrylate (DCPMA), cyclohexyl methacrylate (CHMA), isobornyl methacrylate (IBXMA), isobornyl acrylate (IBXA), dicyclopentanyl acrylate (DCPA), 1-adamantyl methacrylate (ADMA), and 1-adamantyl acrylate (ADA).

It is preferable that the (meth) acrylic polymer (B) includes, as a monomer unit, an acrylic monomer having a relatively bulky structure represented by: (meth)acrylate whose alkyl group has a branched structure, such as t-butyl (meth) acrylate; an ester of a (meth) acrylic acid, such as cyclohexyl(meth)acrylate, (meth)acrylic acid isobornyl, or the like, with an alicyclic alcohol; or (meth) acrylate having a cyclic structure, such as a (meth)acrylic acid aryl ester including (meth)acrylic acid phenyl or (meth)acrylic acid benzyl. By providing such a bulky structure to the (meth) acrylic polymer (B), the adhesiveness of the acrylic pressure-sensitive adhesive composition (acrylic pressure-sensitive adhesive tape) can be further improved. An acrylic monomer having a cyclic structure has a large effect in terms of bulkiness, and that having multiple cyclic structures has a larger effect. In addition, when UV polymerization is adopted in synthesizing the (meth)acrylic polymer (B) or in producing the pressure-sensitive adhesive composition, an acrylic monomer having a saturated bond is preferable in terms of hardly causing inhibition of polymerization, and (meth)acrylate whose alkyl group has a branched structure or an ester with an alicyclic alcohol can be preferably used as a monomer that forms the (meth) acrylic polymer (B).

The (meth)acrylic polymer (B) may also contain, as a monomer unit, a (meth)acrylic monomer having, for example, a tricyclic or higher alicyclic structure. By providing a bulky structure, such as a tricyclic or higher alicyclic structure, to the (meth)acrylic polymer (B), the adhesiveness of the acrylic pressure-sensitive adhesive composition (acrylic pressure-sensitive adhesive tape) can be further improved. In particular, the pressure-sensitive adhesive force to an adherend having low polarity, such as polypropylene, can be improved more remarkably. The (meth)acrylic polymer (B) may be a homopolymer of the (meth)acrylic monomer having a tricyclic or higher alicyclic structure or a copolymer of the (meth)acrylic monomer having a tricyclic or higher alicyclic structure and either of the (meth)acrylic acid ester monomer and the copolymerizable monomer.

The (meth)acrylic monomer is, for example, a (meth)acrylic acid ester represented by the following general formula (3):

$$CH_2=C(R^4)COOR^5 \qquad (3)$$

[wherein, $R^4$ is a hydrogen atom or methyl group and $R^5$ is an alicyclic hydrocarbon group having a tricyclic or higher alicyclic structure].

It is preferable that the alicyclic hydrocarbon group has a three-dimensional structure, such as a bridged ring structure. By providing a tricyclic or higher alicyclic structure having a bridged ring structure to the (meth)acrylic polymer (B), as stated above, the adhesiveness of the acrylic pressure-sensitive adhesive composition (acrylic pressure-sensitive adhesive tape) can be further improved. In particular, the pressure-sensitive adhesive force to an adherend having low polarity, such as polyethylene and polypropylene, can be improved more remarkably. Examples of the alicyclic hydrocarbon group having a bridged ring structure include, for example, a dicyclopentanyl group represented by the following formula (3a), a dicyclopentenyl group represented by the following formula (3b), an adamantyl group represented by the following formula (3c), a tricyclopentanyl group represented by the following formula (3d), and a tricyclopentenyl group represented by the following formula (3e), etc. Among the (meth)acrylic monomers having a tricyclic or higher alicyclic structure containing a bridged ring structure, (meth)acrylic monomers having a saturated structure, such as the dicyclopentanyl group represented by the following formula (3a), the adamantyl group represented by the following formula (3c), and the tricyclopentanyl group represented by the following formula (3d), can be particularly and preferably used as a monomer that forms the (meth)acrylic polymer (B), in terms of hardly causing inhibition of polymerization, when UV polymerization is adopted in synthesizing the (meth)acrylic polymer (B) or in producing the pressure-sensitive adhesive composition.

[Formula 3]

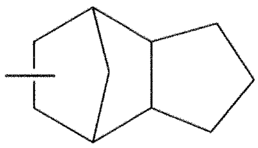

(3a)

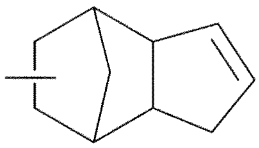

(3b)

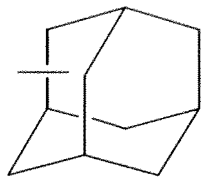

(3c)

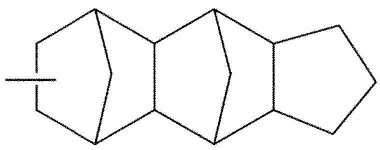

(3d)

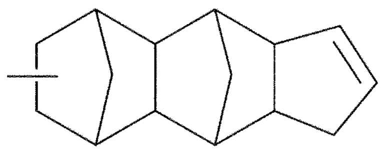

(3e)

Examples of the (meth)acrylic monomer having such a tricyclic or higher alicyclic structure containing a bridged ring structure include (meth)acrylic acid esters, such as dicyclopentanyl methacrylate, dicyclopentanyl acrylate, dicyclopentanyl oxyethyl methacrylate, dicyclopentanyl oxyethyl acrylate, tricyclopentanyl methacrylate, tricyclopentanyl acrylate, 1-adamantyl methacrylate, 1-adamantyl acrylate, 2-methyl-2-adamantyl methacrylate, 2-methyl-2-adamantyl acrylate, 2-ethyl-2-adamantyl methacrylate, and 2-ethyl-2-adamantyl acrylate. These (meth)acrylic monomers can be used alone or in combination of two or more thereof.

A functional group reactive with an epoxy group or an isocyanate group may be further introduced into the (meth)acrylic polymer (B). Examples of such a functional group include a hydroxyl group, carboxyl group, amino group, amide group, and a mercapto group. When the (meth)acrylic polymer (B) is produced, it is preferable to use (copolymerize) a monomer having such a functional group.

The weight average molecular weight of the (meth)acrylic polymer (B) is 1000 or more and less than 30000,

preferably 1500 or more and less than 20000, and more preferably 2000 or more and less than 10000. If the molecular weight is 30000 or more, there are sometimes the cases where the effect of improving the pressure-sensitive adhesive force of the pressure-sensitive adhesive tape cannot be sufficiently obtained. Conversely, if the molecular weight is less than 1000, there are sometimes the cases where, because the molecular weight is too small, the pressure-sensitive adhesive force or holding property of the pressure-sensitive adhesive tape is decreased.

The weight average molecular weight can be determined by a GPC method in terms of polystyrene. Specifically, the weight average molecular weight can be measured by using HPLC8020 and two TSKgel GMH-Hs(20) as columns, which are made by Tosoh Corporation, and under conditions in which a tetrahydrofuran solvent is used and a flow rate is approximately 0.5 ml/min.

The content of the (meth)acrylic polymer (B) is within a range of 2 to 70 parts by weight, and preferably within a range of 5 to 50 parts by weight, based on 100 parts by weight of the acrylic polymer (A). If the (meth)acrylic polymer (B) is added in an amount more than 70 parts by weight, the elastic modulus of a pressure-sensitive adhesive layer formed of the acrylic pressure-sensitive adhesive composition according to the present embodiment becomes large, and hence there are sometimes the cases where the adhesiveness at a low-temperature is deteriorated or the pressure-sensitive adhesive force is not exerted even at room temperature. Conversely, if the addition amount thereof is less than 2 parts by weight, there are sometimes the cases where the effect of adding the (meth)acrylic polymer (B) cannot be obtained.

The glass transition temperature (Tg) of the (meth) acrylic polymer (B) is within a range of approximately 20°C or higher and approximately 300°C or lower, preferably within a range of approximately 30°C or higher and approximately 300°C or lower, and more preferably within a range of approximately 40°C or higher and approximately 300°C or lower. If the glass transition temperature (Tg) is lower than approximately 20°C, the cohesive force of the pressure-sensitive adhesive layer, at a temperature higher than or equal to room temperature, is decreased, and hence there are sometimes the cases where the holding property or the adhesiveness at a high-temperature is decreased. The glass transition temperatures of typical materials that can be used as the (meth) acrylic polymer (B) in the present embodiment are shown in Table 1. The glass transition temperatures shown there are nominal values described in documents or catalogs, etc. , or values calculated based on the following Equation (4) (Fox Equation):

$$1/Tg = W1/Tg1 + W2/Tg2 + *** + Wn/Tgn \qquad (4)$$

[wherein, Tg represents the glass transition temperature of the (meth)acrylic polymer (B) (unit: K), Tgi (i= 1, 2, ***, n) represents the glass transition temperature of a homopolymer that has been formed of a monomer i (unit: K), and Wi (i= 1, 2, *** , n) represents the weight fraction of the monomer i in the whole monomer components]. The above Equation (4) is adopted when the (meth)acrylic polymer (B) is formed of n types of monomer components of monomer 1, monomer 2, *** , monomer n.

[Table 1]

| COMPOSITION OF (METH) ACRYLIC POLYMER [B] | Tg (°C) | REMARKS |
|---|---|---|
| DCPMA | 175 | VALUE DESCRIBED IN DOCUMENTS, ETC. |
| DCPA | 120 | VALUE DESCRIBED IN DOCUMENTS, ETC. |
| IBXMA | 173 | VALUE DESCRIBED IN DOCUMENTS, ETC. |
| IBXA | 97 | VALUE DESCRIBED IN DOCUMENTS, ETC. |
| CHMA | 66 | VALUE DESCRIBED IN DOCUMENTS, ETC. |
| MMA | 105 | VALUE DESCRIBED IN DOCUMENTS, ETC. |
| ADMA | 250 | VALUE DESCRIBED IN DOCUMENTS, ETC. |
| ADA | 153 | VALUE DESCRIBED IN DOCUMENTS, ETC. |
| DCPMA/IBXMA40 | 174 | CALCULATED VALUE (BASED ON Fox EQUATION) |
| DCPMA/MMA40 | 144 | CALCULATED VALUE (BASED ON Fox EQUATION) |

(continued)

| COMPOSITION OF (METH) ACRYLIC POLYMER [B] | Tg (°C) | REMARKS |
|---|---|---|
| DCPMA/MMA60 | 130 | CALCULATED VALUE (BASED ON Fox EQUATION) |
| IBXMA/MMA60 | 130 | CALCULATED VALUE (BASED ON Fox EQUATION) |
| ADMA/MMA40 | 180 | CALCULATED VALUE (BASED ON Fox EQUATION) |
| ADA/MMA40 | 132 | CALCULATED VALUE (BASED ON Fox EQUATION) |

The abbreviations in Table 1 represent the following compounds.

DCPMA: Dicyclopentanyl Methacrylate
DCPA: Dicyclopentanyl Acrylate
IBXMA: Isobornyl Methacrylate
IBXA: Isobornyl Acrylate
CHMA: Cyclohexyl Methacrylate
MMA: Methyl Methacrylate
ADMA: 1-Adamantyl Methacrylate
ADA: 1-Adamantyl Acrylate
DCPMA/IBXMA 40: Copolymer of DCPMA 60 Parts by Weight and IBXMA 40 Parts by Weight
DCPMA/MMA 40: Copolymer of DCPMA 60 Parts by Weight and MMA 40 Parts by Weight
DCPMA/MMA 60: Copolymer of DCPMA 40 Parts by Weight and MMA 60 Parts by Weight
IBXMA/MMA 60: Copolymer of IBXMA 40 Parts by Weight and MMA 60 Parts by Weight
ADMA/MMA 40: Copolymer of ADMA 60 Parts by Weight and MMA 40 Parts by Weight
ADA/MMA 40: Copolymer of ADA 60 Parts by Weight and MMA 40 Parts by Weight

(Method of Producing (Meth)Acrylic Polymer (B))

The (meth) acrylic polymer (B) can be produced by subjecting (meth)acrylic monomers each having the aforementioned structure to polymerization with the use of, for example, a solution polymerization method, bulk polymerization method, emulsion polymerization method, suspension polymerization, and block polymerization.

(Method of Adjusting Molecular Weight of (Meth)Acrylic Polymer (B))

In order to adjust the molecular weight of the (meth) acrylic polymer (B), a chain transfer agent can be used while the polymer (B) is being polymerized. Examples of the chain transfer agent to be used include: compounds having a mercapt group, such as octylmercaptan, t-nonyl mercaptan, dodecyl mercaptan, t-dodecyl mercaptan, mercaptoethanol, and $\alpha$-thioglycerol; thioglycolic acid, methyl thioglycolate, ethyl thioglycolate, propyl thioglycolate, butyl thioglycolate, t-butyl thioglycolate, 2-ethylhexyl thioglycolate, octyl thioglycolate, isooctyl thioglycolate, decyl thioglycolate, dodecyl thioglycolate, thioglycolic acid ester of ethylene glycol, thioglycolic acid ester of neopentyl glycol, and thioglycolic acid ester of pentaerythritol. From the viewpoint of metallic corrosion, examples of particularly preferred chain transfer agent include $\alpha$-thioglycerol, mercaptoethanol, methyl thioglycolate, ethyl thioglycolate, propyl thioglycolate, butyl thioglycolate, t-butyl thioglycolate, 2-ethylhexyl thioglycolate, octyl thioglycolate, and isooctyl thioglycolate.

The use amount of the chain transfer agent is not particularly limited, but the chain transfer agent is usually contained in an amount within a range of approximately 0.1 to approximately 20 parts by weight, preferably within a range of approximately 0.2 to approximately 15 parts by weight, and more preferably within a range of approximately 0.3 to approximately 10 parts by weight, based on 100 parts by weight of the (meth)acrylic monomer. By adjusting the addition amount of the chain transfer agent, as stated above, a (meth)acrylic polymer (B) having a preferred molecular weight can be obtained. The chain transfer agent can be used alone or in combination of two or more thereof.

The acrylic pressure-sensitive adhesive composition according to the present embodiment contains the aforementioned acrylic polymer (A) and (meth)acrylic polymer (B) as essential components, and can contain, as optional components, various additives that are generally used in the field of pressure-sensitive adhesive compositions. A plasticizer, softener, filler, colorant (pigment, dye, or the like), antioxidant, silane coupling agent, leveling agent, stabilizer, and antiseptic, are exemplified as such optional components. Such additives that are conventionally and publicly known can be used by ordinary methods.

Subsequently, the structure of an acrylic pressure-sensitive adhesive tape (or acrylic pressure-sensitive adhesive sheet) having a pressure-sensitive adhesive layer containing an acrylic pressure-sensitive adhesive composition with the aforementioned composition, will be described.

The acrylic pressure-sensitive adhesive tape according to the present embodiment comprises a pressure-sensitive adhesive layer containing an acrylic pressure-sensitive adhesive composition. The acrylic pressure-sensitive adhesive tape may be a so-called pressure-sensitive adhesive tape comprising a substrate, in which such a pressure-sensitive adhesive layer is provided on one or both surfaces of a sheet-shaped substrate (supporting body) in a fixed manner, i.e., without an intention of separating the pressure-sensitive adhesive layer from the substrate; or may be a so-called substrate-less pressure-sensitive adhesive tape in which the pressure-sensitive adhesive layer is provided on a substrate having a release property, such as a release liner (release paper, resin sheet whose surface has been subjected to a release treatment) , so that the substrate for supporting the pressure-sensitive adhesive layer is removed when the tape is attached. The concept of the pressure-sensitive adhesive tape described herein can involve objects referred to as a pressure-sensitive adhesive sheet, pressure-sensitive adhesive label, and pressure-sensitive adhesive film. The pressure-sensitive adhesive layer should not be limited to one continuously formed, but may be one formed into a regular pattern, such as, for example, a dot shape and a stripe shape, or formed into a random pattern.

The aforementioned substrate can be formed of a material appropriately selected, in accordance with the application of the pressure-sensitive adhesive tape, from the group consisting of, for example: plastic films, such as a polypropylene film, ethylene-propylene copolymer film, polyester film, and polyvinylchloride film; foam substrates, such as a polyurethane foam and polyethylene foam; paper, such as craft paper, crepe paper, and Japanese paper; cloth, such as cotton cloth and staple fiber cloth; nonwoven cloth, such as polyester nonwoven fabric and vinylon nonwoven fabric; metallic foils, such as aluminum foil and copper foil. As the aforementioned plastic films, both of a non-oriented film and an oriented (uniaxially oriented or biaxially oriented) film can be used. The surface of the substrate on which the pressure-sensitive adhesive layer is to be provided may be coated with a primer or be subject to a surface treatment, such as a corona discharge treatment. The thickness of the substrate can be appropriately selected in accordance with the purpose, but is generally within a range of approximately 10 μm to 500 μm (typically within a range of 10 μm to 200 μm).

The pressure-sensitive adhesive layer can be a layer in which the acrylic pressure-sensitive adhesive composition has been cured. That is, the pressure-sensitive adhesive layer can be formed by providing the acrylic pressure-sensitive adhesive composition to an appropriate substrate (e.g., coating) and then by appropriately subjecting the composition to a curing treatment. When two or more types of curing treatments (drying, cross-link formation, polymerization, etc.) are performed, these treatments can be performed simultaneously or in multiple stages. In the case of the pressure-sensitive adhesive composition in which a partial polymer (acrylic polymer syrup) has been used, a final copolymerization reaction is typically performed as the curing treatment (the partial polymer is subjected to a further copolymerization reaction to form a complete polymer). For example, in the case of a photo-curing pressure-sensitive adhesive composition, light radiation is performed. A curing treatment, such as cross-link formation, drying, or the like, may be performed, if necessary. For example, when a photo-curing pressure-sensitive adhesive composition needs to be dried, light radiation may be performed after the drying of the composition. In the case of the pressure-sensitive adhesive composition in which a complete polymer has been used, a treatment, such as drying (drying by heating), cross-link formation, is typically performed as the curing treatment, if necessary.

Coating of the acrylic pressure-sensitive adhesive composition can be performed by using a commonly-used coater, such as, for example, a gravure roll coater, reverse roll coater, kiss roll coater, dip roll coater, bar coater, knife coater, or spray coater. In the case of the pressure-sensitive adhesive tape comprising a substrate, a pressure-sensitive adhesive layer may be formed by directly providing a pressure-sensitive adhesive composition to the substrate, or a pressure-sensitive adhesive layer formed on a release liner may be transferred to the substrate.

The thickness of the pressure-sensitive adhesive layer is not particularly limited, but is usually larger than or equal to approximately 10 μm, preferably larger than or equal to approximately 20 μm, and more preferably larger than or equal to approximately 30 μm. Thereby, sufficient adhesiveness can be achieved. The thickness of the pressure-sensitive adhesive layer is appropriately set to be, for example, within a range of approximately 10 to 250 μm.

The acrylic pressure-sensitive adhesive tape according to the present embodiment can be preferably used in the application in which members made of both various resins including, for example, PP (polypropylene), ABS (acrylonitrile-butadiene-styrene copolymer), SBS (styrene-butadiene-styrene block copolymer), PC (polycarbonate), PVC (vinyl chloride), and an acrylic resin, such as PMMA (polymethyl methacrylate), and metals, such as SUS and aluminum, are joined (fixed) to the surfaces of automobiles (coatings of the bodies), house and building materials, and home electronic appliances.

Further, the acrylic pressure-sensitive adhesive tape according to the present embodiment can be preferably used in the application in which various optical members are attached to, for example, liquid crystal cells, optical polyester

films, and touch panel members. Accordingly, the technique described herein includes a laminated body in which the pressure-sensitive adhesive layer including the acrylic pressure-sensitive adhesive composition is provided in the optical member. This laminated body typically has an aspect in which the pressure-sensitive adhesive layer on the optical member is protected by a release liner. The optical member in which such a pressure-sensitive adhesive layer is provided can be easily attached to the surface, of a plastic cover lens panel, glass, or liquid crystal cell. The optical member is not particularly limited, but can be a polarizing film, phase difference film, transparent conductive film (ITO film) Such an optical member may have a single-layer structure made of the same material, or may have a multiple-layer structure made of a plurality of materials. As a method of forming the pressure-sensitive adhesive layer on the optical member, a method of directly providing the pressure-sensitive adhesive layer thereto or a method of transferring the pressure-sensitive adhesive layer thereto can be appropriately adopted, in the same way as in the case where the pressure-sensitive adhesive layer is formed on a substrate. Typically, the pressure-sensitive adhesive layer formed on a release liner is transferred to the base surface of the optical member.

As described above, the acrylic pressure-sensitive adhesive composition according to the present embodiment comprises: the (meth)acrylic polymer (A) that contains, as a monomer unit, a vinyl monomer having a nitrogen atom in its backbone and that does not substantially contain a carboxyl group-containing monomer; and the (meth)acrylic polymer (B) having a a weight average molecular weight of 1000 or more and less than 30000. Accordingly, when a pressure-sensitive adhesive layer is formed by using the acrylic pressure-sensitive adhesive composition, the adhesiveness of the acrylic pressure-sensitive adhesive tape can be improved.

Examples

Hereinafter, the present invention will be described in detail based on Examples, but the invention should not be limited at all by these Examples.

Components of the acrylic pressure-sensitive adhesive compositions according to Examples 1 to 9 and Comparative Examples 1 to 6 are shown in Table 2.

[Table 2]

| | ACRYLIC POLYMER (A) | (METH) ACRYLIC POLYMER (B) | | |
|---|---|---|---|---|
| | COMPOSITION RATIO (100 PARTS BY WEIGHT) | TYPE | NUMBER OF ADDED PARTS (BASED ON 100 PARTS BY WEIGHT OF ACRYLIC POLYMER (A)) | CHAIN TRANSFER AGENT |
| EXAMPLE 1 | 2EHA/NVP=86/14 | DCPMA | 20 PARTS BY WEIGHT | GSH ACID |
| EXAMPLE 2 | 2EHA/NVP=86/14 | DCPMA | 20 PARTS BY WEIGHT | GSH |
| EXAMPLE 3 | 2EHA/NVP=86/14 | DCPMA/IBXMA40 | 20 PARTS BY WEIGHT | GSH ACID |
| EXAMPLE 4 | 2EHA/NVP=86/14 | CHMA | 20 PARTS BY WEIGHT | GSH |
| EXAMPLE 5 | 2EHA/NVP=86/14 | IBXMA | 20 PARTS BY WEIGHT | GSH |
| EXAMPLE 6 | 2EHA/NVP=86/14 | IBXA | 20 PARTS BY WEIGHT | GSH |
| EXAMPLE 7 | 2EHA/NVP=86/14 | ADMA | 20 PARTS BY WEIGHT | GSH ACID |
| EXAMPLE 8 | 2EHA/NVP=86/14 | ADA | 20 PARTS BY WEIGHT | GSH ACID |
| EXAMPLE 9 | 2EHA/NVP=86/14 | ADA/MMA40 | 20 PARTS BY WEIGHT | GSH ACID |
| COMPARATIVE EXAMPLE 1 | 2EHA/NVP=86/14 | - | - | - |
| COMPARATIVE EXAMPLE 2 | 2EHA/AA=94/6 | - | - | - |
| COMPARATIVE EXAMPLE 3 | 2EHA/AA=94/6 | CHMA | 20 PARTS BY WEIGHT | GSH |
| COMPARATIVE EXAMPLE 4 | 2EHA/AA=94/6 | DCPMA LOW | 20 PARTS BY WEIGHT | GSH ACID |

(continued)

| | ACRYLIC POLYMER (A) | (METH) ACRYLIC POLYMER (B) | | |
|---|---|---|---|---|
| | COMPOSITION RATIO (100 PARTS BY WEIGHT) | TYPE | NUMBER OF ADDED PARTS (BASED ON 100 PARTS BY WEIGHT OF ACRYLIC POLYMER (A)) | CHAIN TRANSFER AGENT |
| COMPARATIVE EXAMPLE 5 | 2EHA/AA=94/6 | DCPA | 20 PARTS BY WEIGHT | LSH |
| COMPARATIVE EXAMPLE 6 | 2EHA/AA=94/6 | IBXMA | 20 PARTS BY WEIGHT | GSH |

The abbreviations in Table 2 represent the following compounds.

2EHA: 2-Ethylhexyl Acrylate
NVP: N-vinyl-2-pyrrolidone
AA: Acrylic Acid
DCPMA: Dicyclopentanyl Methacrylate
IBXMA: Isobornyl Methacrylate
DCPA: Dicyclopentanyl Acrylate
CHMA: Cyclohexyl Methacrylate
IBXA: Isobornyl Acrylate
ADMA: 1-Adamantyl Methacrylate
ADA: 1-Adamantyl Acrylate
MMA: Methyl Methacrylate
DCPMA Low: Dicyclopentanyl Methacrylate having a polymerization degree lower than that of DCPMA (Examples 1 and 2)
GSH Acid: Thioglycolic Acid
GSH: 2-Mercaptoethanol
LSH: Lauryl Mercaptan

(Preparation of (Meth)Acrylic Polymer 1 (DCPMA) as (B) Component)

One hundred parts by weight of toluene, 100 parts by weight of dicyclopentanyl methacrylate (DCPMA) (product name: FA-513M, made by Hitachi Chemical Co., Ltd.), and 3 parts by weight of thioglycolic acid (GSH acid), as a chain transfer agent, were placed into a 4-neck flask. After they were stirred under a nitrogen atmosphere at 70°C for 1 hour, 0.2 parts by weight of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth)acrylic polymer 1 to be obtained. The glass transition temperature of the obtained (meth) acrylic polymer 1 was 175°C and the weight average molecular weight thereof was 4600.

(Preparation of (Meth) Acrylic Polymer 2 (DCPMA) as (B) Component)

One hundred parts by weight of toluene, 100 parts by weight of dicyclopentanyl methacrylate (DCPMA) (product name: FA-513M, made by Hitachi Chemical Co., Ltd.), and 3 parts by weight of 2-mercaptoethanol (thioglycol, GSH), as a chain transfer agent, were placed into a 4-neck flask. After they were stirred under a nitrogen atmosphere at 70°C for 1 hour, 0.2 parts by weight of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth)acrylic polymer 2 to be obtained. The glass transition temperature of the obtained (meth) acrylic polymer 2 was 175°C and the weight average molecular weight thereof was 3600.

(Preparation of (Meth)Acrylic Polymer 3 (DCPMA Low) as (B) Component)

One hundred parts by weight of toluene, 60 parts by weight of dicyclopentanyl methacrylate (DCPMA) (product name: FA-513M, made by Hitachi Chemical Co., Ltd.), and 5 parts by weight of thioglycolic acid (GSH acid), as a chain transfer agent, were placed into a 4-neck flask. After they were stirred under a nitrogen atmosphere at 75°C for 1 hour, 0.2 parts by weight of azobisisobutyronitrile were placed therein as a thermal polymerization initiator to react with them at 75°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth)acrylic polymer 3 to be obtained. The glass transition temperature of the obtained (meth) acrylic polymer 3 was 175°C and the weight average molecular weight thereof was 3000.

(Preparation of (Meth)Acrylic Polymer 4 (DCPMA/IBXMA 40) as (B) Component)

One hundred parts by weight of toluene, 60 parts by weight of dicyclopentanyl methacrylate (DCPMA) (product name: FA-513M, made by Hitachi Chemical Co., Ltd.), 40 parts by weight of isobornyl methacrylate (IBXMA), and 3 parts by weight of thioglycolic acid (GSH Acid), as a chain transfer agent, were placed into a 4-neck flask. After they were stirred under a nitrogen atmosphere at 70°C for 1 hour, 0.2 parts by weight of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth)acrylic polymer 4 to be obtained. The glass transition temperature of the obtained (meth) acrylic polymer 4 was 174°C and the weight average molecular weight thereof was 4800.

(Preparation of (Meth)Acrylic Polymer 5 (DCPA) as (B) Component)

One hundred parts by weight of toluene, 100 parts by weight of dicyclopentanyl acrylate (DCPA) (product name: FA-513AS, made by Hitachi Chemical Co., Ltd.), and 8 parts by weight of lauryl mercaptan (LSH), as a chain transfer agent, were placed into a 4-neck flask. After they were stirred under a nitrogen atmosphere at 70°C for 1 hour, 0.2 parts by weight of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth) acrylic polymer 5 to be obtained. The glass transition temperature of the obtained (meth)acrylic polymer 5 was 120°C and the weight average molecular weight thereof was 3600.

(Preparation of (Meth)Acrylic Polymer 6 (CHMA) as (B) Component)

One hundred parts by weight of toluene, 100 parts by weight of cyclohexyl methacrylate (CHMA), and 3 parts by weight of 2-mercaptoethanol (thioglycol, GSH), as a chain transfer agent, were placed into a 4-neck flask. After they were stirred under a nitrogen atmosphere at 70°C for 1 hour, 0.2 parts by weight of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth)acrylic polymer 6 to be obtained. The glass transition temperature of the obtained (meth) acrylic polymer 6 was 66°C and the weight average molecular weight thereof was 3700.

(Preparation of (Meth)Acrylic Polymer 7 (IBXMA) as (B) Component)

One hundred parts by weight of toluene, 100 parts by weight of isobornyl methacrylate (IBXMA), and 3 parts by weight of 2-mercaptoethanol (thioglycol, GSH), as a chain transfer agent, were placed into a 4-neck flask. After they were stirred under a nitrogen atmosphere at 70°C for 1 hour, 0.2 parts by weight of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth)acrylic polymer 7 to be obtained. The glass transition temperature of the obtained (meth) acrylic polymer 7 was 173°C and the weight average molecular weight thereof was 3100.

(Preparation of (Meth)Acrylic Polymer 8 (IBXA) as (B) Component)

One hundred parts by weight of toluene, 100 parts by weight of isobornyl acrylate (IBXA), and 3 parts by weight of 2-mercaptoethanol (thioglycol, GSH), as a chain transfer agent, were placed into a 4-neck flask. After they were stirred under a nitrogen atmosphere at 70°C for 1 hour, 0.2 parts by weight of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth)acrylic polymer 8 to be obtained. The glass transition temperature of the obtained (meth) acrylic polymer 8 was 97°C and the weight average molecular weight thereof was 3300.

(Preparation of (Meth)Acrylic Polymer 9 (ADMA) as (B) Component)

One hundred parts by weight of toluene, 100 parts by weight of 1-adamantyl methacrylate (ADMA), and 3 parts by weight of thioglycolic acid (GSH acid), as a chain transfer agent, were placed into a 4-neck flask. After they were stirred under a nitrogen atmosphere at 70°C for 1 hour, 0.2 parts by weight of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth)acrylic polymer 9 to be obtained. The glass transition temperature of the obtained (meth) acrylic polymer 9 was 250°C and the weight average molecular weight thereof was 4100.

(Preparation of (Meth)Acrylic Polymer 10 (ADA) as (B) Component)

One hundred parts by weight of toluene, 100 parts by weight of 1-adamantyl acrylate (ADA), and 3 parts by weight of thioglycolic acid (GSH acid), as a chain transfer agent, were placed into a 4-neck flask. After they were stirred under a nitrogen atmosphere at 70°C for 1 hour, 0.2 parts by weight of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth)acrylic polymer 10 to be obtained. The glass transition temperature of the obtained (meth)acrylic polymer 10 was 153°C and the weight average molecular weight thereof was 3500.

(Preparation of (Meth)Acrylic Polymer 11 (ADA/MMA 40) as (B) Component)

One hundred parts by weight of toluene, 60 parts by weight of 1-adamantyl acrylate (ADA), 40 parts by weight of methyl methacrylate (MMA), and 3 parts by weight of thioglycolic acid (GSH acid), as a chain transfer agent, were placed into a 4-neck flask. After they were stirred under a nitrogen atmosphere at 70°C for 1 hour, 0.2 parts by weight of azobisisobutyronitrile were placed therein as a thermal polymerization initiator to react with them at 70°C for 2 hours, and subsequently they were reacted together at 80°C for 2 hours. Thereafter, the reaction liquid was placed under a temperature atmosphere of 130°C to dry and remove the toluene, chain transfer agent, and unreacted monomer, thereby allowing a solid (meth) acrylic polymer 11 to be obtained. The glass transition temperature of the obtained (meth)acrylic polymer 11 was 132°C and the weight average molecular weight thereof was 4100.

(Preparation of Acrylic Polymer Syrup 1 (2EHA/NVP = 86/14) as (A) Component)

Eighty six parts by weight of 2-ethylhexyl acrylate (2EHA), 14 parts by weight of N-vinyl-2-pyrrolidone (NVP), 0.05 parts by weight of a photo-polymerization initiator (product name: IRGACURE 184, made by Ciba Speciality Chemicals Inc.), and 0.05 parts by weight of a photo-polymerization initiator (product name: IRGACURE 651, made by Ciba Speciality Chemicals Inc.) were placed into a 4-neck flask. A partial polymer (acrylic polymer syrup 1) having a rate of polymerization of approximately 11% by weight was obtained by exposing the mixture to UV rays under a nitrogen atmosphere such that the mixture was partially photopolymerized.

(Preparation of Acrylic Polymer Syrup 2 (2EHA/AA = 94/6))

Ninety four parts by weight of 2-ethylhexyl acrylate (2EHA), 6 parts by weight of acrylic acid (AA), 0.05 parts by weight of a photo-polymerization initiator (product name: IRGACURE 184, made by Ciba Speciality Chemicals Inc.), and 0.05 parts by weight of a photo-polymerization initiator (product name: IRGACURE 651, made by Ciba Speciality

Chemicals Inc.) were placed into a 4-neck flask. A partial polymer (acrylic polymer syrup 2) having a rate of polymerization of approximately 8% by weight was obtained by exposing the mixture to UV rays under a nitrogen atmosphere such that the mixture was partially photopolymerized.

(Example 1)

(Preparation of Acrylic Pressure-Sensitive Adhesive Composition)

After 20 parts by weight of the aforementioned (meth)acrylic polymer 1 and 0.085 parts by weight of trimethylolpropane triacrylate were added to 100 parts by weight of the aforementioned acrylic polymer syrup 1, they were uniformly mixed together such that an acrylic pressure-sensitive adhesive composition was prepared.

(Production of Pressure-Sensitive Adhesive Layer Sheet)

A coated layer having a final thickness of 50 μm was formed by coating the aforementioned acrylic pressure-sensitive adhesive composition on one of the surfaces of a polyester film having a thickness of 38 μm (product name: MRF, made by Mitsubishi Chemical Polyester Co. , Ltd.), the one of the surfaces having been subjected to a release treatment with silicone. Subsequently, the surface of the coated acrylic pressure-sensitive adhesive composition was covered with one of the surfaces of a polyester film having a thickness of 38 μm (product name: MRN, made by Mitsubishi Chemical Polyester Co. , Ltd.), the one of the surfaces having been subjected to a release treatment with silicone, so that the one of the surfaces of the film was located near to the coated layer. Thereby, oxygen was blocked from the coated layer of the acrylic pressure-sensitive adhesive composition (pressure-sensitive adhesive layer). The pressure-sensitive adhesive layer sheet thus obtained was irradiated, for 360 seconds, with UV rays with an illumination intensity of 5 $mW/cm^2$ (measured by TOPCON UVR-T1 having a maximum sensitivity at 350 nm), the UV rays being created by using a black light lamp (made by TOSHIBA CORPORATION). The gel fraction of the pressure-sensitive adhesive layer made of the acrylic pressure-sensitive adhesive composition thus obtained was 61.5% by weight. The polyester film covering each of the surfaces of the pressure-sensitive adhesive layer functions as a release liner.

(Example 2)

An acrylic pressure-sensitive adhesive composition and a pressure-sensitive adhesive layer sheet were obtained in the same way as in Example 1, except that 20 parts by weight of the aforementioned (meth) acrylic polymer 2 and 0.085 parts by weight of trimethylolpropane triacrylate were added to 100 parts by weight of the aforementioned acrylic polymer syrup 1. The gel fraction of the obtained pressure-sensitive adhesive layer was 67.7% by weight.

(Example 3)

An acrylic pressure-sensitive adhesive composition and a pressure-sensitive adhesive layer sheet were obtained in the same way as in Example 1, except that 20 parts by weight of the aforementioned (meth) acrylic polymer 4 and 0.14 parts by weight of trimethylolpropane triacrylate were added to 100 parts by weight of the aforementioned acrylic polymer syrup 1. The gel fraction of the obtained pressure-sensitive adhesive layer was 68.5% by weight.

(Example 4)

An acrylic pressure-sensitive adhesive composition and a pressure-sensitive adhesive layer sheet were obtained in the same way as in Example 1, except that 20 parts by weight of the aforementioned (meth) acrylic polymer 6 and 0.14 parts by weight of 1,6-hexanediol diacrylate were added to 100 parts by weight of the aforementioned acrylic polymer syrup 1. The gel fraction of the obtained pressure-sensitive adhesive layer was 74.9% by weight.

(Example 5)

An acrylic pressure-sensitive adhesive composition and a pressure-sensitive adhesive layer sheet were obtained in the same way as in Example 1, except that 20 parts by weight of the aforementioned (meth)acrylic polymer 7 and 0.1 parts by weight of trimethylolpropane triacrylate were added to 100 parts by weight of the aforementioned acrylic polymer syrup 1. The gel fraction of the obtained pressure-sensitive adhesive layer was 68.4% by weight.

(Example 6)

An acrylic pressure-sensitive adhesive composition and a pressure-sensitive adhesive layer sheet were obtained in the same way as in Example 1, except that 20 parts by weight of the aforementioned (meth)acrylic polymer 8 and 0.1 parts by weight of trimethylolpropane triacrylate were added to 100 parts by weight of the aforementioned acrylic polymer syrup 1. The gel fraction of the obtained pressure-sensitive adhesive layer was 71.9% by weight.

(Example 7)

An acrylic pressure-sensitive adhesive composition and a pressure-sensitive adhesive layer sheet were obtained in the same way as in Example 1, except that 20 parts by weight of the aforementioned (meth)acrylic polymer 9 and 0.12 parts by weight of trimethylolpropane triacrylate were added to 100 parts by weight of the aforementioned acrylic polymer syrup 1. The gel fraction of the obtained pressure-sensitive adhesive layer was 74.7% by weight.

(Example 8)

An acrylic pressure-sensitive adhesive composition and a pressure-sensitive adhesive layer sheet were obtained in the same way as in Example 1, except that 20 parts by weight of the aforementioned (meth) acrylic polymer 10 and 0.1 parts by weight of trimethylolpropane triacrylate were added to 100 parts by weight of the aforementioned acrylic polymer syrup 1. The gel fraction of the obtained pressure-sensitive adhesive layer was 74.6% by weight.

(Example 9)

An acrylic pressure-sensitive adhesive composition and a pressure-sensitive adhesive layer sheet were obtained in the same way as in Example 1, except that 20 parts by weight of the aforementioned (meth) acrylic polymer 11 and 0.12 parts by weight of trimethylolpropane triacrylate were added to 100 parts by weight of the aforementioned acrylic polymer syrup 1. The gel fraction of the obtained pressure-sensitive adhesive layer was 64.9% by weight.

(Comparative Example 1)

An acrylic pressure-sensitive adhesive composition and a pressure-sensitive adhesive layer sheet were obtained in the same way as in Example 1, except that 0.045 parts by weight of 1,6-hexanediol diacrylate were added to 100 parts by weight of the aforementioned acrylic polymer syrup 1. The gel fraction of the obtained pressure-sensitive adhesive layer was 77.4% by weight.

(Comparative Example 2)

An acrylic pressure-sensitive adhesive composition and a pressure-sensitive adhesive layer sheet were obtained in the same way as in Example 1, except that 0.07 parts by weight of 1,6-hexanediol diacrylate were added to 100 parts by weight of the aforementioned acrylic polymer syrup 2. The gel fraction of the obtained pressure-sensitive adhesive layer was 75.2% by weight.

(Comparative Example 3)

An acrylic pressure-sensitive adhesive composition and a pressure-sensitive adhesive layer sheet were obtained in the same way as in Example 1, except that 20 parts by weight of the aforementioned (meth)acrylic polymer 6 and 0.11 parts by weight of 1,6-hexanediol diacrylate were added to 100 parts by weight of the aforementioned acrylic polymer syrup 2. The gel fraction of the obtained pressure-sensitive adhesive layer was 67.7% by weight.

(Comparative Example 4)

An acrylic pressure-sensitive adhesive composition and a pressure-sensitive adhesive layer sheet were obtained in the same way as in Example 1, except that 20 parts by weight of the aforementioned (meth)acrylic polymer 3 and 0.18 parts by weight of trimethylolpropane triacrylate were added to 100 parts by weight of the aforementioned acrylic polymer syrup 2. The gel fraction of the obtained pressure-sensitive adhesive layer was 62.1% by weight.

(Comparative Example 5)

An acrylic pressure-sensitive adhesive composition and a pressure-sensitive adhesive layer sheet were obtained in the same way as in Example 1, except that 20 parts by weight of the aforementioned (meth) acrylic polymer 5 and 0.11 parts by weight of 1,6-hexanediol diacrylate were added to 100 parts by weight of the aforementioned acrylic polymer syrup 2. The gel fraction of the obtained pressure-sensitive adhesive layer was 69.7% by weight.

(Comparative example 6)

An acrylic pressure-sensitive adhesive composition and a pressure-sensitive adhesive layer sheet were obtained in the same way as in Example 1, except that 20 parts by weight of the aforementioned (meth) acrylic polymer 7 and 0.14 parts by weight of trimethylolpropane triacrylate were added to 100 parts by weight of the aforementioned acrylic polymer syrup 2. The gel fraction of the obtained pressure-sensitive adhesive layer was 68.7% by weight.

(Test Method)

[180° Peeling-Off Pressure-Sensitive Adhesive Force Test]

After one of the release liners (polyester films) on the pressure-sensitive adhesive layer sheet according to each of Examples and Comparative Examples was peeled off, a polyethylene terephthalate film having a thickness of 50 μm was attached. The obtained sheet was cut into a piece having a width of 25 mm, which was used as a test specimen. In addition, a polypropylene plate (part number: 1600, made by Takiron Co. , Ltd.) and an acrylic plate (ACRYLITE, made by Mitsubishi Rayon Co., Ltd.), which had been cleaned with isopropyl alcohol and had a thickness of 2 mm, were prepared as adherends having low polarity. After the release liner (polyester film) on the other surface of the pressure-sensitive adhesive layer sheet was peeled off, the pressure-sensitive adhesive surface of the sheet was attached to the polypropylene plate or acrylic plate by reciprocating a 2-kg roller.

After the pressure-sensitive adhesive layer sheet was attached to the polypropylene plate and the acrylic plate, the sheet was left uncontrolled under a 23°C-environment for 30 minutes (initial condition). Alternatively, after the pressure-sensitive adhesive layer sheet was attached to the polypropylene plate and the acrylic plate, the sheet was left uncontrolled under a 40°C-environment for 48 hours and then under a 23°C-environment for 30 minutes (normal condition). With respect to the pressure-sensitive adhesive layer sheet of each of the initial condition and the normal condition, the pressure-sensitive adhesive force (resistance force) (unit: N/25 mm) thereof to an adherend was measured by peeling off the other end of the sheet in the 180° peeling-off direction at a speed of 300 mm/min. With respect to the polypropylene plate and the acrylic plate of each of the initial condition and the normal condition, the case where the pressure-sensitive adhesive force was larger than or equal to 16 N/25 mm was evaluated as good (°), while the case where the pressure-sensitive adhesive force was less than 16 N/25 mm was evaluated as bad (×). Results of the measurement are shown in Table 3.

[Resistance to Resilience Test]

The pressure-sensitive adhesive layer sheet according to each of Examples and Comparative Examples was cut into a piece having a width of 10 mm and a length of 90 mm, and the piece was attached to a clean aluminum plate having a thickness of 0.5 mm, a width of 10 mm, and a length of 90 mm, which was used as a test specimen. Subsequently, the test specimen was curved so as to have a curvature of R = 50 mm by making the test specimen near to the aluminum plate follow a cylinder. Thereafter, the release liner (polyester film) on the other side of the pressure-sensitive adhesive layer sheet was peeled off, and then the test specimen was laminated onto the aforementioned polypropylene plate. After the test specimen, in the state of being laminated onto the polypropylene plate, was left uncontrolled at room temperature (25°C) for 7 hours, the distance created by pop-off of the pressure-sensitive adhesive layer sheet, i.e., the distance between the surface of the polypropylene plate and the pressure-sensitive adhesive layer (average of the heights at both ends) (unit: mm) was measured. The case where the distance of the pop-off was smaller than or equal to 10 mm was evaluated as good (°), while the case where the distance thereof was larger than 10 mm was evaluated as bad (×). Results of the measurement are shown in Table 3. Herein, the values shown in Table 3 are average values with respect to arbitrary multiple points.

[Holding Property Test]

After one of the release liners (polyester films) on the pressure-sensitive adhesive layer sheet according to each of Examples and Comparative Examples was peeled off, a polyethylene terephthalate film having a thickness of

50 μm was attached. The obtained sheet was cut into a piece having a width of 10 mm, which was used as a test specimen. The pressure-sensitive adhesive surface of the test specimen having the area of 10 mm in width × 20 mm in length was attached to a bakelite plate that had been cleaned with toluene, and the test specimen was left uncontrolled under a 60°C-environment for 30 minutes. Thereafter, a weight was hung from one end of the specimen such that a 500-g load was applied in the shear direction, and the specimen, in the state of the weight being hung, was left uncontrolled under a 60°C-environment for 2 hours, thereafter allowing a holding property to be evaluated. The case where the test specimen had not dropped was evaluated as good (°), while the case where the test specimen had dropped was evaluated as bad (×). Results of the measurement are shown in Table 3.

[Table 3]

| | PEELING-OFF PRESSURE-SENSITIVE ADHESIVE FORCE TEST (PRESSURE-SENSITIVE ADHESIVE FORCE [N/25 mm]) | | | | RESISTANCE TO RESILIENCE TEST | HOLDING PROPERTY TEST |
|---|---|---|---|---|---|---|
| | POLYPROPYLENE PLATE | | ACRYLIC PLATE | | POP-OFF DISTANCE [mm] | |
| | INITIAL CONDITION | NORMAL CONDITION | INITIAL CONDITION | NORMAL CONDITION | | |
| EXAMPLE 1 | 18(○) | 20(○) | 29(○) | 29(○) | 2.3(○) | ○ |
| EXAMPLE 2 | 17(○) | 18(○) | 25(○) | 26(○) | 3.4(○) | ○ |
| EXAMPLE 3 | 20(○) | 20(○) | 28(○) | 27(○) | 0.3(○) | ○ |
| EXAMPLE 4 | 16(○) | 16(○) | 24(○) | 24(○) | 5.8(○) | ○ |
| EXAMPLE 5 | 18(○) | 18(○) | 29(○) | 29(○) | 5.3(○) | ○ |
| EXAMPLE 6 | 16(○) | 17(○) | 20(○) | 20(○) | 9.3(○) | ○ |
| EXAMPLE 7 | 18(○) | 20(○) | 22(○) | 25(○) | 5.2(○) | ○ |
| EXAMPLE 8 | 16(○) | 17(○) | 19(○) | 21(○) | 8.5(○) | ○ |
| EXAMPLE 9 | 20(○) | 19(○) | 27(○) | 27(○) | 1.0(○) | ○ |
| COMPARATIVE EXAMPLE 1 | 11(×) | 12(×) | 15(×) | 16(○) | 11.0(×) | ○ |
| COMPARATIVE EXAMPLE 2 | 11(×) | 12(×) | 18(○) | 20(○) | 11.4(×) | ○ |
| COMPARATIVE EXAMPLE 3 | 16(○) | 14(×) | 24(○) | 34(○) | 4.7(○) | ○ |
| COMPARATIVE EXAMPLE 4 | 14(×) | 16(○) | 21(○) | 24(○) | 10.8(×) | ○ |
| COMPARATIVE EXAMPLE 5 | 12(×) | 8(×) | 18(○) | 14(×) | 11.9(×) | ○ |
| COMPARATIVE EXAMPLE 6 | 15(×) | 15(×) | 24(○) | 26(○) | 11.9(×) | ○ |

As shown in Table 3, the pressure-sensitive adhesive force of the test specimen, according to each of Comparative Examples 1, 2, 5, and 6, to the polypropylene plate was bad in each of the initial condition and the normal condition. The pressure-sensitive adhesive force thereof, according to Comparative Example 3, to the polypropylene plate, was good in the initial condition, but bad in the normal condition. The pressure-sensitive adhesive force thereof, according to Comparative Example 4, to the polypropylene plate was good in the normal condition, but bad in the initial condition. The pressure-sensitive adhesive force thereof, according to Comparative Example 1, to the acrylic plate was good in the normal condition, but bad in the initial condition. The pressure-sensitive adhesive force thereof, according to Comparative Example 5, to the acrylic plate was good in the initial condition, but bad in the normal condition. On the other hand, the pressure-sensitive adhesive force of the test specimen, according to each of Examples 1 to 9, to each of the polypropylene plate and the acrylic plate was good in each of the initial condition and the normal condition. That is, it was confirmed that the adhesiveness in each of Examples was more improved in comparison with those in Comparative Examples 1 to 6. Further, it was confirmed that the resistance to resilience in each of Examples was more improved in comparison with those in Comparative Examples 1, 2, and 4 to 6. Furthermore, it was confirmed that a sufficient holding property (cohesive force) was maintained in each of Examples and Comparative Examples. Accordingly, it was confirmed that excellent pressure-sensitive adhesive force, excellent resistance to resilience, and an excellent holding property were combined in each of Examples 1 to 9. Furthermore, it was confirmed that the pressure-sensitive adhesive force and the resistance to resilience in each of Examples were more improved in comparison with those in Comparative Example 1 in which the acrylic oligomer was not contained even if the acrylic polymer was the same as that in each of Examples.

Industrial Applicability

The present invention can be used in an acrylic pressure-sensitive adhesive composition and an acrylic pressure-sensitive adhesive tape.

## Claims

1. An acrylic pressure-sensitive adhesive composition comprising:

an acrylic polymer (A) that contains, as a monomer unit, a vinyl monomer having a nitrogen atom in its backbone, wherein the acrylic polymer (A) is a copolymer in which the vinyl monomer having a nitrogen atom in its backbone and a (meth)acrylic acid ester represented by the following general formula (1) are copolymerized together as an essential component:

$$CH2{=}C(R^1)COOR^2 \qquad (1)$$

wherein $R^1$ is a hydrogen atom or methyl group and $R^2$ is a C1-12 alkyl group or alicyclic hydrocarbon group, wherein the acrylic polymer (A) contains a copolymerizable monomer, which is copolymerizable with the vinyl monomer and the (meth)acrylic acid ester, wherein the copolymerizable monomer is selected from the group including vinyl esters, such as vinyl acetate and vinyl propionate; cyanoacrylate monomers, such as acrylonitrile and methacrylonitrile; (meth)acrylic acid alkoxy alkyl monomers, such as (meth)acrylic acid methoxyethyl and (meth)acrylic acid ethoxyethyl; hydroxyl group-containing monomers, such as (meth)acrylic acid hydroxyalkyls including (meth)acrylic acid hydroxyethyl, (meth)acrylic acid hydroxypropyl, (meth)acrylic acid hydroxybutyl, (meth)acrylic acid hydroxyhexyl, (meth)acrylic acid hydroxy octyl, (meth)acrylic acid hydroxydecyl, (meth)acrylic acid hydroxylauryl, and (4-hydroxymethyl cyclohexyl)methyl methacrylate ; styrene monomers, such as styrene and $\alpha$-methylstyrene; epoxy group-containing acrylic monomers, such as (meth)acrylic acid glycidyl; glycol acrylic ester monomers, such as (meth)acrylic acid polyethylene glycol, (meth)acrylic acid polypropylene glycol, (meth)acrylic acid methoxyethylene glycol, and (meth)acrylic acid methoxypolypropylene glycol; acrylic acid ester monomers having a heterocycle, halogen atom, silicon atom, such as (meth)acrylic acid tetrahydrofurfuryl, fluorine atom-containing (meth)acrylate, and silicone(meth)acrylate; olefin monomers, such as isoprene, butadiene, and isobutylene; vinyl ether monomers, such as methyl vinyl ether and ethyl vinyl ether; aromatic vinyl compounds, such as vinyl toluene and styrene; olefins or dienes, such as ethylene, butadiene, isoprene, and isobutylene; vinyl ethers, such as vinyl alkyl ether; and vinyl chloride; or combinations thereof, wherein the copolymerizable monomer is contained in an amount within a range of 0.1 to 40% by weight, based on the total weight of the monomer components for preparing the acrylic polymer (A),
wherein the acrylic polymer (A) does not substantially contain a carboxyl group-containing monomer, wherein the carboxyl group-containing monomer includes ethylenically unsaturated monocarbonic acids, such as

(meth)acrylic acid and crotonic acid; ethylenically unsaturated dicarbonic acids, such as maleic acid, itaconic acid, and citraconic acid; and ethylenically unsaturated dicarbonic acid anhydrides, such as maleic acid anhydride and itaconic acid anhydride, wherein the content of the carboxyl group in the acrylic polymer (A) is 0.1 % by weight or less, based on the total weight of the monomer components; and
a (meth)acrylic polymer (B) having a weight average molecular weight of 1000 or more and less than 30000, wherein the content of the (meth)acrylic polymer (B) is within a range of 2 to 70 parts by weight, based on 100 parts by weight of the acrylic polymer (A).

**2.** The acrylic pressure-sensitive adhesive composition according to claim 1, wherein the vinyl monomer is one or more types of monomers selected from the group consisting of the N-vinyl cyclic amides represented by the following general formula (2) and (meth)acrylic amides:

[Formula 1]

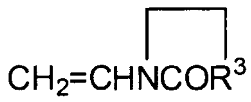 (2)

[wherein, $R^3$ is a divalent organic group].

**3.** An acrylic pressure-sensitive adhesive tape having a pressure-sensitive adhesive layer containing the acrylic pressure-sensitive adhesive composition of any one of claims 1 or 2.

**Patentansprüche**

**1.** Druckempfindliche Acrylklebezusammensetzung, umfassend:

ein Acrylpolymer (A), das, als eine Monomereinheit, ein Vinylmonomer enthält, das ein Stickstoffatom in seinem Rückgrat besitzt, wobei das Acrylpolymer (A) ein Copolymer ist, bei dem das Vinylpolymer, das ein Stickstoffatom in seinem Rückgrat besitzt, und ein (Meth)acrylsäureester, das durch die folgende allgemeine Formel (1) dargestellt ist, als eine essentielle Komponente miteinander copolymerisiert werden:

$$CH2=C(R^1)COOR^2 \qquad (1)$$

wobei $R^1$ ein Wasserstoffatom oder eine Methylgruppe ist und $R^2$ eine C1-12 Alkylgruppe oder eine alicyclische Kohlenwasserstoffgruppe ist,
wobei das Acrylpolymer (A) ein copolymerisierbares Monomer enthält, das mit dem Vinylmonomer und dem (Meth)acrylsäureester copolymerisierbar ist, wobei das copolymerisierbare Monomer ausgewählt ist aus der Gruppe, beinhaltend Vinylester, wie Vinylacetat und Vinylpropionat; Cyanoacrylatmonomere, wie Acrylnitril und Methacrylnitril; Alkoxyalkyl(meth)acrylsäuremonomere, wie Methoxyethyl(meth)acrylsäure und Ethoxyethyl(meth)acrylsäure; Hydroxylgruppenenthaltende Monomere, wie Hydroxyalkyl(meth)acrylsäuren, beinhaltend Hydroxyethyl(meth)acrylsäure, Hydroxypropyl(meth)acrylsäure, Hydroxybutyl(meth)acrylsäure, Hydroxyhexyl(meth)acrylsäure, Hydroxyoctyl(meth)acrylsäure, Hydroxydecyl(meth)acrylsäure, Hydroxylauryl(meth)acrylsäure, und (4-Hydroxymethylcyclohexyl)methylmethacrylat; Styrolmonomere, wie Styrol und $\alpha$-Methylstyrol, Epoxygruppen-enthaltende Acrylmonomere, wie Glycidyl(meth)acrylsäure; Glycolacrylsäuremonomere, wie (Meth)acrylsäurepolyethylenglycol, (Meth)acrylsäurepolypropylenglycol, (Meth)acrylsäuremethoxyethylenglycol, und (Meth)acrylsäuremethoxypopypropylenglycol; Acrylsäureestermonomere, besitzend einen Hydrocyclus, ein Halogenatom, ein Siliziumatom, wie Tetrahydrofurfuryl(meth)acrylsäure, Fluoratom-enthaltendes (Meth)acrylat, und Silikon(meth)acrylat; Olefinmonomere, wie Isopren, Butadien, und Isobutylen; Vinylethermonomere, wie Methylvinylether und Ethylvinylether; aromatische Vinylverbindungen, wie Vinyltoluol und Styrol; Olefine oder Diene, wie Ethylen, Butadien, Isopren, Isobutylen; Vinylether, wie Vinylalkylether; und Vinylchlorid; oder Kombinationen davon; wobei das copolymerisierbare Monomer in einer Menge im Bereich von 0,1 bis 40 Gew.-% enthalten ist, basierend auf dem Gesamtgewicht der Monomerkomponenten zum Herstellen des Acrylpolymers (A),
wobei das Acrylpolymer (A) im wesentlichen kein Carbonsäuregruppen-enthaltendes Monomer enthält, wobei das Carbonsäuregruppen-enthaltende Monomer ethylenisch ungesättigte Monocarbonsäuren, wie (Meth)acrylsäure und Crotonäure; ethylenisch ungesättigte Dicarbonsäuren, wie Maleinsäure, Itaconsäure und Citraconsäure, und ethylenisch ungesättigte Dicyrbonsäureanhydride, wie Maleinsäureanhydrid und Itaconsäureanhydrid beinhaltet, wobei der Anteil der Carboxylgruppe im Acrylpolymer (A) 0,1 Gew.-% oder weniger ist, basierend auf dem Gesamtgewicht der Monomerkomponenten; und
ein (Meth)acrylpolymer (B), das ein gewichtsgemitteltes Molekulargewicht von 1.000 oder mehr und weniger als 30.000 besitzt, wobei der Anteil des (Meth)acrylpolymers (B) im Bereich von 2 bis 70 Gew.-Teilen liegt, basierend auf 100 Gew.-Teilen des Acrylpolymers (A).

**2.** Die druckempfindliche Acrylklebezusammensetzung gemäß Anspruch 1, wobei das Vinylmonomer ein oder mehrere Monomertypen ist, ausgewählt aus der Gruppe, bestehend aus den N-vinylcyclischen Amiden, dargestellt durch die folgende allgemeine Formel (2), und (Meth)acrylamiden:

[Formel 1]

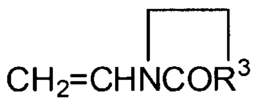

(2)

[wobei $R^3$ eine divalente organische Gruppe ist].

**3.** Druckempfindliches Acrylklebeband, das eine druckempfindliche Klebeschicht besitzt, die die druckempfindliche Acrylklebezusammensetzung nach irgendeinem der Ansprüche 1 oder 2 enthält.

## Revendications

**1.** Composition adhésive acrylique sensible à la pression comprenant :

un polymère acrylique (A) qui contient, en tant que motif monomère, un monomère vinylique ayant un atome d'azote dans son squelette, le polymère acrylique (A) étant un copolymère dans lequel le monomère vinylique ayant un atome d'azote dans son squelette et un ester d'acide (méth)acrylique représenté par la formule générale suivante (1) sont copolymérisés ensemble en tant que composant essentiel :

$$CH2=C(R^1)COOR^2 \qquad (1)$$

où $R^1$ est un atome d'hydrogène ou un groupe méthyle et $R^2$ est un groupe alkyle en C1 à 12 ou un groupe hydrocarbure alicyclique,
le polymère acrylique (A) contenant un monomère copolymérisable, qui peut être copolymérisé avec le monomère vinylique et l'ester d'acide (méth)acrylique, le monomère copolymérisable étant choisi dans le groupe incluant des esters vinyliques, tels que l'acétate de vinyle et le propionate de vinyle ; des monomères cyanoacrylate, tels que l'acrylonitrile et le méthacrylonitrile ; des monomères d'acide (méth)acrylique alkoxyalkyliques, tels que l'acide (méth)acrylique méthoxyéthylique et l'acide (méth)acrylique éthoxyéthylique ; des monomères contenant un groupe hydroxyle, tels que des acides (méth)acryliques hydroxyalkyliques y compris l'acide (méth)acrylique hydroxyéthylique, l'acide (méth)acrylique hydroxypropylique, l'acide (méth)acrylique hydroxybutylique, l'acide (méth)acrylique hydroxyhexylique, l'acide (méth)acrylique hydroxyoctylique, l'acide (méth)acrylique hydroxydécylique, l'acide (méth)acrylique hydroxylaurylique et le méthacrylate de (4-hydroxyméthylcyclohexyl)méthyle ; des monomères styrène, tels que le styrène et l'α-méthylstyrène ; des monomères acryliques contenant un groupe époxy, tels que l'acide (méth)acrylique glycidylique ; des monomères ester acrylique de glycol, tels que l'acide (méth)acrylique polyéthylène glycol, l'acide (méth)acrylique polypropylène glycol, l'acide (méth)acrylique méthoxyéthylène glycol et l'acide (méth)acrylique méthoxypolypropylène glycol ; des monomères ester d'acide acrylique ayant un hétérocycle, un atome d'halogène, un atome de silicium, tels que l'acide (méth)acrylique tétrahydrofurfurylique, un (méth)acrylate contenant un atome de fluor et un (méth)acrylate de silicone ; des monomères oléfiniques, tels que l'isoprène, le butadiène et l'isobutylène ; des monomères éther de vinyle, tels que l'éther de méthyle et de vinyle et l'éther d'éthyle et de vinyle ; des composés vinyliques aromatiques, tels que le vinyle toluène et styrène ; des oléfines ou des diènes, tels que l'éthylène, le butadiène, l'isoprène et l'isobutylène ; des éthers de vinyle, tels qu'un éther d'alkyle et de vinyle ; et le chlorure de vinyle, ou des combinaisons de ceux-ci, le monomère copolymérisable étant présent en une quantité dans

une fourchette de 0,1 à 40 % en poids, sur la base du poids total des composants monomères utilisés pour préparer le polymère acrylique (A),
le polymère acrylique (A) ne contenant sensiblement pas de monomère contenant un groupe carboxyle, le monomère contenant un groupe carboxyle incluant des acides monocarboniques à insaturation éthylénique, tels que l'acide (méth)acrylique et l'acide crotonique ; des acides dicarboniques à insaturation éthylénique, tels que l'acide maléique, l'acide itaconique et l'acide citraconique ; et des anhydrides d'acide dicarbonique à insaturation éthylénique, tels que l'anhydride d'acide maléique et l'anhydride d'acide itaconique, la teneur en groupe carboxyle dans le polymère acrylique (A) étant de 0,1 % en poids ou moins, sur la base du poids total des composants monomères ; et
un polymère (méth)acrylique (B) ayant une masse moléculaire moyenne en poids de 1000 ou plus et moins de 30 000, la teneur en polymère (méth)acrylique (B) étant dans une fourchette de 2 à 70 parties en poids, sur la base de 100 parties en poids du polymère acrylique (A).

2. Composition adhésive acrylique sensible à la pression selon la revendication 1, dans laquelle
le monomère vinylique est un ou plusieurs types de monomères choisis dans le groupe constitué des amides cycliques N-vinyliques représentés par la formule générale (2) suivante et d'amides (méth)acryliques :

[Formule 1]

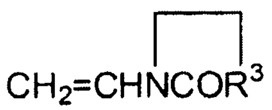 (2)

[dans laquelle $R^3$ est un groupe organique divalent].

3. Ruban adhésif acrylique sensible à la pression ayant une couche adhésive contenant la composition adhésive acrylique sensible à la pression selon l'une quelconque des revendications 1 ou 2.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6207151 A
- JP 1999504054 W
- JP 2008222814 A
- JP 2006213603 A
- US 2005080195 A1
- JP 2003129022 A
- EP 2169024 A1
- WO 2009116504 A1
- JP 2009120807 A